# EUROPÄISCHE PATENTSCHRIFT

(11) **EP 3 303 043 B1**
(45) Veröffentlichungstag und Bekanntmachung des Hinweises auf die Patenterteilung: **11.08.2021**
(21) Anmeldenummer: 16725506.6
(22) Anmeldetag: 25.05.2016
(51) Int. Cl.: B60K 37/06, G06F 3/0354

(54) **BEDIENVORRICHTUNG MIT SCHNELLER HAPTISCHER RÜCKMELDUNG**
OPERATING DEVICE WITH FAST HAPTIC FEEDBACK
DISPOSITIF DE COMMANDE À INFORMATION HAPTIQUE RAPIDE EN RETOUR

(30) Priorität: 26.05.2015 DE 102015209593
(43) Veröffentlichungstag der Anmeldung: 11.04.2018
(73) Patentinhaber: Volkswagen Aktiengesellschaft, 38440 Wolfsburg (DE)
(72) Erfinder: CZELNIK, Mark Peter, 38444 Wolfsburg (DE); KLAAS, Michael, 38179 Schwülper (DE); RIEGER, Carsten, 38268 Lengede (DE)
(86) Internationale Anmeldenummer: PCT/EP2016/061758
(87) Internationale Veröffentlichungsnummer: WO 2016/189017

(56) Entgegenhaltungen:
- FR-A1- 2 953 304
- JP-A- 2005 216 110

## Beschreibung

Die Erfindung betrifft berührungsempfindliche Bedienvorrichtung mit einer berührungsempfindlichen Positionserfassungseinrichtung, wobei die Bedienvorrichtung bei einer Betätigung eine haptische Rückkopplung erzeugt. Insbesondere betrifft die Erfindung eine Bedienvorrichtung, die eine Bedieneinrichtung und eine getrennt hiervon ausgebildete Zentralsteuereinrichtung aufweist, die informationstechnisch gekoppelt sind, wobei die berührungsempfindliche Positionserfassungseinrichtung mit einer Aktoreinrichtung zum Erzeugen der haptischen Rückkopplung in der Bedieneinrichtung ausgebildet sind.

In modernen Kraftfahrzeugen sind eine Vielzahl von Funktionen und Fahrzeugsystemen zu bedienen. Da ein Bauraum im Fahrzeug begrenzt ist und somit nicht für jedes Fahrzeugsystem und jede Fahrzeugfunktion ein einzelnes der speziellen Funktionen und dem Fahrzeugsystem zugeordnetes Bedienelement ausbildbar und anordenbar sind, ist es heute üblich eine Vielzahl von solchen Fahrzeugsystemen und Bedienfunktionen über eine Multifunktionsanzeige- und Bedienvorrichtung zu bedienen beziehungsweise bedienbar zu machen. Solche Multifunktionsanzeige- und Bedienvorrichtungen, welche typischer Weise in einer Mittelkonsole eines Kraftfahrzeuges angeordnet sind, umfassen in der Regel eine frei programmierbare Anzeigefläche sowie benachbart zu der Anzeigefläche angeordnete physisch ausgebildete Bedienelemente wie Taster, Drehimpulsgeber oder ähnliches. Über eine grafische Darstellung auf der frei programmierbaren Anzeigefläche können den einzelnen physisch ausgebildeten Bedienelementen in unterschiedlichen Anzeige- und Bedienkontexten zugeordnete Funktionen grafisch angezeigt werden. Solche grafischen Darstellungen werden als Bedienelementezuordnungen bezeichnet.

Um eine Variabilität weiter zu steigern, werden in Kraftfahrzeugen auch berührungsempfindliche Positionserfassungseinrichtungen eingesetzt, welche eine Berührposition eines Betätigungselements erfassen können. Unterschieidlichen Orten oder Gebieten auf der Berührfläche können hierbei unterschiedliche Funktionen und/oder Funktionalitäten zugeordnet werden. Die Zuordnung kann beispielsweise über aufgedruckte Informationen erfolgen Bei Weiterbildungen dieser Anzeige- und Bedienvorrichtungen wird der berührungsempfindliche Positionserfassungseinrichtung eine frei programmierbare grafische Anzeigefläche einer Anzeigevorrichtung zugeordnet. Hierbei korrelieren Positionen auf einer Berührfläche der berührungsempfindlichen Positionserfassungseinrichtung mit Positionen auf der grafischen Anzeigefläche. Ist die Berührungsfläche der berührungsempfindlichen Positionserfassungseinrichtung transparent ausgebildet und vor der Anzeigefläche angeordnet, so wird die Kombination aus frei programmierbarer Anzeigefläche und berührungsempfindlicher Positionserfassungseinrichtung als Touchscreen bezeichnet. Eine berührungsempfindliche Positionserfassungseinrichtungen, die nicht vor einer freiprogrammierbaren Anzeigefläche angeordnet ist, wird auch als Touchpad bezeichnet.
Während ein Nutzer bei einer Betätigung eines physisch ausgebildeten Bedienelements, beispielsweise eines Tasters, beim Erreichen eines Anschlags oder einem Zurückschnappen einer Auslösemechanik ein haptisches Feedback erhält, welches insbesondere in Kraftfahrzeugen auch eine Blindbedienung von Tasten ermöglicht, ist ein solches haptisches Feedback, welches auch als haptische Rückkopplung oder Rückmeldung bezeichnet wird, bei gewöhnlichen Touchscreens nicht realisiert.

Aus dem Stand der Technik sind jedoch Weiterbildungen bekannt, bei denen ein Aktor mit der berührungsempfindlichen Positionserfassungseinrichtung und/oder dem Touchscreen gekoppelt ist. Der Aktor bewirkt eine mechanische Vibration oder Auslenkung, um ein fühlbares, das heißt haptisch wahrnehmbares, Feedback beziehungsweise eine haptisch wahrnehmbare Rückkopplung zu erzeugen.

Die DE 103 24 580 A1 beschreibt eine Bedienvorrichtung zur Steuerung von Systemen im Kraftfahrzeug durch Eingaben eines Benutzers über ein berührungsempfindliches Bedienfeld, auf dem zwei Oberflächenformen darstellbar sind, die wechselseitig ineinander überführbar sind, wobei die erste Oberflächenform taktil erfassbar strukturiert ist, so dass mit ihr Zonen auf dem Bedienfeld zur Auswahl von Menüpunkten selektierbar sind. Die Oberfläche des Bedienfeldes ist als dehnbare Folie ausgebildet, die im Bereich der selektierbaren Zonen und am Rand des Bedienfeldes unlösbar mit diesem verbunden ist, und im Übrigen unverbunden auf dem Bedienfeld aufliegt, so dass die erste, taktil erfassbar strukturierte Oberflächenform des Bedienfelds durch Anfüllen des Raumes zwischen Folie und Bedienfeld mit einem Medium erzeugbar ist, und diese strukturierte Oberflächenform durch Ablassen des Mediums aus dem Raum zwischen Folie und Bedienfeld in die zweite, ebene Oberflächenform auflösbar ist. Weist das Bedienfeld die zweite, ebene Oberflächenform auf, sind handschriftliche Eingaben auf dem Bedienfeld möglich.

Die DE 10 2006 012 147 A1 beschreibt eine Eingabevorrichtung, insbesondere für ein Kraftfahrzeug, wobei die Eingabevorrichtung ein Gehäuse, eine in dem Gehäuse angeordnete Anzeigevorrichtung zur optischen Darstellung von Informationen, eine über der Anzeigevorrichtung angeordnete berührungsempfindlichen Positionserfassungseinrichtung zur Eingabe von Befehlen durch ein Berühren der Berührfläche und einen Aktor zum Bewegen der berührungsempfindlichen Positionserfassungseinrichtung oder des Gehäuses in zumindest eine Richtung umfasst, wobei das Gehäuse gegenüber der Anzeigevorrichtung bewegbar ist. Eine solche Einrichtung kann bei einer Nutzereingabe eine haptische Rückkopplung bereitstellen.

Aus der JP 2005 216110 A ist eine Bedienvorrichtung mit einer Einrichtung zur Ausgabe eines taktilen Stimulus bekannt. Ferner ist aus der FR 2 953 304 eine Steuereinrichtung mit einem Touchpad in Kraftfahrzeugen bekannt.

Aufgrund der Anzahl der in einem Fahrzeug verfügbaren Fahrzeugfunktionen und der steigenden Komplexität der bereitgestellten Fahrzeugfunktionen als auch aufgrund des beschränken Bauraums, sind Bedienvorrichtungen bekannt, bei denen die für die tatsächliche Nutzereingabeerfassung zuständige Bedieneinrichtung getrennt von einer Zentralsteuereinrichtung ausgebildet ist. Die Bedieneinrichtung und die Zentralsteuereinrichtung sind informationstechnisch miteinander gekoppelt und stellen im Zusammenwirken die Funktionalität der Bedienvorrichtung bereit. Dabei kann die Zentralsteuereinrichtung so ausgebildet sein, dass diese noch über das Bereitstellen einer Benutzerschnittstelle für die Erfassung von Nutzereingaben hinausgehende Funktionen bereitstellt und zentrale Steuerungsaufgaben für Fahrzeugfunktionen übernimmt. Eine Bedienlogik der durch die Bedienvorrichtung bereitgestellten Nutzerschnittstelle ist hierbei in der Zentralsteuereinrichtung ausgebildet. So ist es möglich auch für komplexe Fahrzeugfunktionen eine von dem jeweiligen Funktionsstand abhängige Nutzerschnittstelle bereitzustellen. Jedoch ist eine haptische Rückkopplung noch nicht befriedigend gelöst, da die Zentralsteuereinrichtung oft eine lange Verarbeitungszeit der in der Bedieneinrichtung erfassten Eingabeparameter aufgrund der konkurrierenden bereitgestellten Funktionalitäten zeigt.

Der Erfindung liegt somit die technische Aufgabe zugrunde, eine verbesserte Bedienvorrichtung zu schaffen, mit der insbesondere eine haptische Rückkopplung, welche beispielsweise für eine Blindbedienung durch einen Nutzer wichtig ist, verbessert wird.

Die Erfindung wird durch eine Bedienvorrichtung mit den Merkmalen des Patentanspruchs 1 sowie ein Verfahren Erfassen von Nutzereingaben für eine Steuerung und/oder ein Auslösen von Funktionen und/oder Fahrzeugsystemen mittels berührender Betätigung einer Berührfläche einer berührungsempfindlichen Positionserfassungseinrichtung mit den Merkmalen des Patentanspruchs 7 gelöst. Vorteilhafte Ausführungsformen ergeben sich aus den Unteransprüchen.

Der Erfindung liegt die Idee zugrunde, eine Latenzzeit, die zwischen dem Ausführen einer berührenden Betätigung, d.h. dem Erfassen einer Parametereingabe eines Nutzers und dem Ausgeben einer haptischen Rückkopplung an den Nutzer vergeht, zu minimieren, um eine zeitnahe Rückkopplung zu erhalten. Bei großen Latenzzeiten wird die haptische Rückkopplung durch einen Nutzer nicht mehr der eigentlichen Betätigungshandlung zugeordnet, so dass der Nutzer, insbesondere der ungeübte Benutzer irritiert, wird. Ohne die Bedienlogik in die Bedieneinrichtung verlagern zu müssen, lässt sich diese Aufgabe dadurch lösen, dass in der Bedieneinrichtung eine Haptiksteuereinrichtung ausgebildet wird, an die die erfassten Eingabeparameter zusätzlich übermittelt werden. Diese Haptiksteuereinrichtung wertet somit die in der Bedieneinrichtung erfassten Bedienparameter getrennt von der Zentralsteuereinrichtung, an die diese Eingabeparameter ebenfalls übermittelt werden, aus, um zu erkennen, ob eine Nutzereingabe vorliegt, auf die eine haptische Rückkopplung ausgegeben werden soll. Hierfür sind nur wenige Informationen notwendig. Die Voraussetzungen, die erfüllt sein müssen, um eine haptische Rückkopplung auszulösen, werden in einer Auslösebedingung zusammengefasst. Eine oder mehrere Auslösebedingungen, die zu einem Zeitpunkt gültig sind, werden einer Vorlage zugeordnet. Die Vorlagen werden in einem Speicher der Haptiksteuereinrichtung abgelegt. Von der Zentralsteuereinheit wird mittels eines Vorlagesignals eine Vorlage als aktuelle ausgewählt oder erzeugt, so dass die Haptiksteuereinrichtung ohne eine Kenntnis der Bedienlogik auf Nutzereingaben zeitnah mit einer haptischen Rückkopplung reagieren kann, wenn sich anhand der erfassten Eingabeparameter ergibt, dass eine Auslösebedingung der aktuellen Vorlage erfüllt ist. Der Vorteil dieser Erfindung besteht darin, dass eine ausgetauschte Datenmenge zwischen Bedieneinrichtung und Zentralsteuereinrichtung verringert wird und zugleich eine Latenzzeit für eine haptische Rückkopplung deutlich reduziert wird.

### Definitionen

Als Bedienungsvorrichtung wird eine Vorrichtung zum Erfassen einer Eingabe eines Nutzers verstanden. Auch als Anzeige- und Bedienvorrichtung bezeichnete Vorrichtungen werden hier als Bedienvorrichtung betrachtet.

Als Bedieneinrichtung wird der Teil einer Bedienvorrichtung bezeichnet, der an oder in dem Gehäuse ausgebildet ist, in dem die für eine Erfassung einer Nutzereingabe verwendete physisch ausgebildete Einrichtung zur Nutzererfassung ausgebildet ist.

Bei einer Bedienvorrichtung, bei der eine Nutzereingabe über eine berührende Betätigung einer berührungsempfindlichen Positionserfassungseinrichtung erfolgt, umfasst die Bedieneinrichtung sämtliche Komponenten, die in dem Gehäuse oder an dem Gehäuse ausgebildet sind, in oder an welchem eine Berührfläche der berührungsempfindlichen Positionserfassungseinrichtung angeordnet ist, einschließlich des Gehäuses.

Als Zentralsteuereinrichtung wird der Teil der Bedienvorrichtung bezeichnet, der eine Funktionsauslösung und Funktionssteuerung von Fahrzeugfunktionen und Fahrzeugsystemen, die nicht unmittelbar die Nutzereingabeerfassung betreffen, abhängig von den erfassten Eingabeparametern bewirkt. In der Zentralsteuereinrichtung ist somit eine Bedienlogik der Bedienvorrichtung ausgebildet, die beispielsweise festlegt, welche Funktion bei Vorleigen welcher Eingabeparameter ausgelöst oder aktiviert wird.

Als frei programmierbare Anzeigevorrichtung wird eine Vorrichtung mit einer Anzeigefläche aufgefasst, bei der an derselben Position der Anzeigefläche zeitlich nacheinander unterschiedlichste Informationen grafisch darstellbar sind. Da dieses gesteuert über eine programmgesteuerte Einrichtung erfolgt, wird von einer frei programmierbaren Anzeigevorrichtung gesprochen. Eine Anzeigefläche einer solchen frei programmierbaren Anzeigevorrichtung wird als frei programmierbare Anzeigefläche bezeichnet.

Eine berührungsempfindliche Positionserfassungseinrichtung ist eine Vorrichtung, welche eine Berührfläche aufweist, welche in der Regel eben und glatt ausgebildet ist, und welche ausbildet ist, einen Ort einer Berührung durch ein Betätigungselement zu bestimmen. Ein solcher bestimmter Ort wird als Berührposition bezeichnet. Berührungsempfindliche Positionserfassungseinrichtungen, welche in der Lage sind zeitgleich mehrere Berührpositionen zu erfassen, werden als mehrfach berührungsempfindliche Positionserfassungseinrichtungen oder auch als Multi-Touch-fähige Vorrichtungen bezeichnet. Diese stellen eine Untergruppe der berührungsempfindlichen Positionserfassungseinrichtungen dar.

Ist die Berührfläche transparent ausgebildet und mit einer dahinter angeordneten frei programmierbaren Anzeigefläche gekoppelt, so wird die Gesamtvorrichtung als Touchscreen bezeichnet. Auch hierbei gibt es erneut die Einteilung in einfach-berührungsempfindliche Touchscreens und mehrfach- berührungsempfindliche Touchscreens, welche zeitgleich mehrere Berührungspositionen von Betätigungselementen erfassen können.

Als Betätigungselement wird ein Gegenstand bezeichnet, welcher zum Betätigen der berührungsempfindlichen Positionserfassungseinrichtung geeignet ist. In der Regel handelt es sich hierbei um einen Körperteil, beispielsweise einen ausgestreckten Finger, besonders bevorzugt einen Zeigefinger. Alternativ kann jedoch auch ein Stift oder anderer Gegenstand als Betätigungselement dienen.

Als virtuelles Bedienelement wird die Ausgestaltung eines Bedienelements über eine frei programmierbare Anzeigefläche in Verbindung mit einem berührungsempfindlichen Positionserfassungseinrichtung bezeichnet. Hierbei ist dem virtuellen Bedienelement in der Regel eine grafische Darstellung auf der Anzeigefläche zugeordnet. Zusätzlich existiert ein relativ zur berührungsempfindlichen Positionserfassungseinrichtung definierter Auslösebereich, innerhalb dessen Berührpositionen als Anwahl des entsprechenden virtuellen Bedienelements aufgefasst werden.

Als Druckkraftmesseinrichtung wird jede Messeinrichtung bezeichnet, die in der Lage ist, eine bei der Betätigung der Berührfläche einer Positionserfassungseinrichtung senkrecht zur Berührfläche wirkende Betätigungskraft zu messen. Hierbei kommen alle Sensortypen und Sensoren, oder Sensorelemente in Frage, die eine solche Messung ermöglichen.

Als Dehnungsmessstreifen werden streifenförmige Sensorelemente bezeichnet, die eine physikalisch messbare Eigenschaft aufgrund einer Dehnung des Streifens ändern. Insbesondere sind Dehnungsmessstreifen als resistive Sensorelemente ausgebildet, die bei einer Dehnung ihren Widerstand ändern.

Als Steuerung einer Vorrichtung wird eine Gesamtheit aller Komponenten bezeichnet, welche für eine Auswertung von erfassten Signalen oder Nutzereingaben und/oder für eine Steuerung von Bestandteilen der Vorrichtung und/oder anderen Vorrichtungen vorgesehen sind. Die Komponenten der Steuerung können in Hardware und/oder Software oder Kombinationen von Hardware und Software umgesetzt sein. Komponenten der Steuerung, welche in der Bedieneinrichtung der Bedienvorrichtung ausgebildet sind, werden als lokale Steuereinrichtungen bezeichnet.

Die Begriffe haptisches Feedback, haptische Rückkopplung und haptische Rückmeldung werden als synonyme Begriffe verwendet. Sie beschreiben einen durch den Tastsinn es Menschen wahrnehmbaren Effekt zum Zwecke der Rückmeldung an einen Nutzer einer Vorrichtung.

Sofern hier vom Erfassen oder Ermitteln der Andruckkraft gesprochen wird, ist ein getrennt von der berührungsempfindlichen Positionserfassung ausgebildetes Erfassen oder Ermitteln gemeint.

Eine Auslösebedingung fasst alle Voraussetzungen für erfasste Eingabeparameter zusammen, die vorliegen müssen, damit eine haptische Rückkopplung ausgelöst wird. Die Voraussetzungen werden auch als Vorgaben bezeichnet.

Voraussetzungen, die Bedingungen für zu unterschiedlichen Zeitpunkten erfasste Eingabeparameter aufweisen, werden Verlaufsvorgaben genannt.

Eine Vorlage fasst eine oder mehrere Auslösebedingungen zusammen.

### Bevorzugte Ausführungsformen

Insbesondere wird eine Bedienvorrichtung für ein Fahrzeug mit haptischer Rückkopplung geschaffen, welche umfasst:
eine berührungsempfindliche Positionserfassungseinrichtung zum Ermitteln von Berührpositionen als Eingabeparameter auf einer Berührfläche der berührungsempfindlichen Positionserfassungseinrichtung ;
eine mit der berührungsempfindlichen Positionserfassungseinrichtung gekoppelte Aktoreinrichtung zum Erzeugen der haptisch erfassbaren Rückkopplung an der Berührfläche; sowie
eine Bedienlogik, die ausgebildet ist, ein Auslösen von Funktionen und/oder Fahrzeugsystemen abhängig von erfassten Eingabeparametern auszuführen,
wobei die berührungsempfindliche Positionserfassungseinrichtung und die Aktoreinrichtung mit einer Haptiksteuereinrichtung in einer Bedieneinrichtung ausgebildet sind, und die Bedienlogik in einer von der Bedieneinrichtung getrennt ausgebildeten Zentralsteuereinrichtung ausgebildet ist, welche informationstechnisch mit der Bedieneinrichtung gekoppelt ist, und erfasste Eingabeparameter an die Haptiksteuereinrichtung und vorzugsweise auch an die Zentralsteuereinrichtung übermittelt werden, wobei die Haptiksteuereinrichtung eine Speichereinrichtung umfasst, in der mehrere unterschiedliche Vorlagen gespeichert sind, wobei die mehreren Vorlagen jeweils mindestens eine Auslösebedingungen für eine haptische Rückkopplung umfassen, und
die Bedienlogik ausgebildet ist, ein Vorlagesignal zum Auswählen oder Erzeugen einer aktuellen Vorlage an die Haptiksteuereinrichtung zu übertragen und wobei die Haptiksteuereinrichtung eine Vergleichereinrichtung aufweist, die die bei einer Nutzereingabe über die Bedieneinrichtung in der Bedieneinrichtung erfassten Eingabeparameter mit der mindestens einen Auslösebedingung der aktuellen Vorlage vergleicht, um zu ermitteln, ob die erfassten Eingabeparameter die mindestens eine Auslösebedingung erfüllen, und die Haptiksteuereinrichtung ausgebildet ist, die Aktoreinrichtung zum Erzeugen der haptischen Rückkopplung ansteuern, wenn die Vergleichereinrichtung die Erfüllung der mindestens einen Auslösebedingung festgestellt hat.

Ebenso wird eine Verfahren zum Erfassen von Nutzereingaben für eine Steuerung und/oder ein Auslösen von Funktionen und/oder Fahrzeugsystemen mittels berührender Betätigung einer Berührfläche einer berührungsempfindlichen Positionserfassungseinrichtung geschaffen, welches die Schritte umfasst:
Erfassen von Eingabeparametern bei der berührenden Betätigung der Berührfläche einer berührungsempfindlichen Positionserfassungseinrichtung,
Auswerten der erfassten Eingabeparametern gegenüber einer Bedienlogik, die abhängig von erfassten Eingabeparametern ein Auslösen von den Funktionen und/oder den Fahrzeugsystemen bewirkt, und
Erzeugen einer haptischen Rückkopplung an der Berührfläche, wenn eine Nutzereingabe erfasst ist,
wobei das Erfassen der Eingabeparameter an einer Bedieneinrichtung erfolgt, die getrennt von einer Zentralsteuereinrichtung ausgebildet ist, die informationstechnisch mit der Bedieneinrichtung gekoppelt ist, und das Auswerten gegenüber der Bedienlogik in der Zentralsteuereinrichtung ausgeführt wird, wobei von der Zentralsteuereinrichtung zu der Haptiksteuereinrichtung der Bedieneinrichtung ein Vorlagesignal übertragen wird, anhand dessen eine von mehreren Vorlagen der Haptiksteuereinrichtung als aktuelle Vorlage ausgewählt wird oder die aktuelle Vorlage erzeugt wird, wobei eine Vorlage jeweils mindestens eine Auslösebedingungen für eine haptische Rückkopplung umfasst, und die an oder in der Bedieneinrichtung erfassten Eingabeparameter an eine Haptiksteuereinrichtung in der Bedieneinrichtung und vorzugsweise an die Zentralsteuereinrichtung übermittelt werden und in der Haptiksteuereinrichtung die erfassten Eingabeparameter mit der mindestens einen Auslösebedingung vergleichen werden, um zu ermitteln, ob die erfassten Eingabeparameter die mindestens eine Auslösebedingung erfüllen, und die Haptiksteuereinrichtung die Aktoreinrichtung zum Erzeugen der haptischen Rückkopplung ansteuert, wenn das Vergleichen der Eingabeparameter mit der mindestens einen Auslösebedingung ergibt, dass die mindestens einen Auslösebedingung erfüllt ist.

Um eine zeitnahe haptische Rückkopplung zu der Betätigung zu erlangen, wird das Auslösen der haptischen Rückkopplung über eine in die Bedieneinrichtung integrierte Haptik-Steuereinrichtung bewirkt. Diese wertet in einer einfachen Ausführungsform beispielsweise lediglich die erfassten Andruckkräfte aus. Sobald der erste Kraftschwellenwert erreicht oder überschritten ist, wird das erste haptische Feedback und gegebenenfalls das erste akustische Feedback in Form eines zeitlich synchronisiert ausgegebenen Klangsignals ausgegeben. Beim nachfolgenden Unterschreiten des zweiten Kraftschwellenwertes, werden das zweite haptische und gegebenenfalls zweite akustische Feedback ausgegeben.

Um jedoch zu verhindern, dass das haptische Feedback erzeugt wird, wenn der Nutzer mit dem Betätigungselement an einem Ort gegen die Berührfläche drückt, der nicht in dem Auslösebereich eines virtuellen Bedienelements liegt, ist eine lokale Haptiksteuerung vorzugsweise so ausgebildet, dass dieser die Positionen oder Bereiche der Berührfläche übermittelt werden, an denen sich ein Auslösebereich eines der auf der Anzeigefläche dargestellten virtuellen Bedienelemente befindet. Eine Überwachung der Kraftschwellen findet in einer lokalen Haptik-Steuereinrichtung ebenso wie ein Prüfen der aktuell ermittelten Berührpositionen gegenüber den Berührpositionen der Aktivierungsbereiche statt. Liegt die Berührposition in irgendeinem der Aktivierungsbereiche und wird zugleich die erste Kraftschwelle überschritten, so wird das erste Aktor-Aktivierungssignal und gegebenenfalls zusätzlich das erste Klang-Aktivierungssignal erzeugt. Nachfolgend wird nach dem anschließenden Unterschreiten der zweiten Kraftschwelle das zweite Aktor-Aktivierungssignal und gegebenenfalls ein zweites Klang-Aktivierungssignal erzeugt. Vorteil dieser Ausführungsform ist es, dass jeweils zeitnah und unbeeinflusst von Übermittlungszeiten an den Zentralrechner und dessen Verarbeitungsgeschwindigkeit ein haptisches Feedback bei einer Bedienelementbetätigung erzeugt wird. Zusätzlich werden die Berührpositionen und Kraftwerte über ein Bus-System an den Zentralrechner übermittelt, der dann die eigentliche Funktionsauslösung und gegebenenfalls grafische Umgestaltung der auf der Anzeigefläche dargestellten Informationen veranlasst.

In der Regel soll eine haptische Rückkopplung somit nur erzeugt werden, wenn die berührende Betätigung an Bestimmten Positionen der Berührfläche oder in bestimmten Gebieten erfolgt. Eine Ausführungsform des Bediensystems sieht daher vor, dass die mindestens eine Auslösebedingung mindestens eine Gebietsdefinition für einen Auslösebereich umfasst und die Vergleichereinrichtung ausgebildet ist, die Erfüllung der mindestens einen Auslösebedingung nur festzustellen, wenn beim Vergleichen der erfassten Eingabeparameter mit der mindestens einen Auslösebedingung ermittelt wird, dass die als Eingabeparameter erfasste Berührposition in dem Auslösebereich der Auslösebedingung liegt.
Das Verfahren sieht nach dieser Ausführungsform vor, dass eine Berührposition als Eingabeparameter erfasst wird, und die mindestens eine Auslösebedingung mindestens eine Gebietsdefinition für einen Auslösebereich umfasst und die Erfüllung der mindestens einen Auslösebedingung nur festgestellt wird, wenn beim Vergleichen der erfassten Eingabeparameter mit der mindestens einen Auslösebedingung ermittelt wird, dass die als Eingabeparameter erfasste Berührposition in dem Auslösebereich der Auslösebedingung liegt.

Bei Bedienvorrichtungen, welche mit einem Touchscreen oder einem abgesetzten Touchpad ausgerüstet sind, besteht eine weitere Schwierigkeit bei der Bedienung, insbesondere in einem Kraftfahrzeug, darin, dass es aufgrund von Erschütterungen auf unebener Fahrbahn oder Ähnlichem dazu kommen kann, dass ein Nutzer mit einem Betätigungselement, beispielsweise seinem Finger, die berührungsempfindliche Positionserfassungseinrichtung unbeabsichtigt oder an einer nicht gewünschten Position im Vorfeld eines Betätigungsvorgangs berührt. Um somit Fehlauslösungen zu vermeiden, ist bei einigen Weiterbildungen vorgesehen, dass zusätzlich in der Regel zu der Berührposition auch eine Druckkraft ermittelt wird, mit der das Betätigungselement gegen die berührungsempfindliche Positionserfassungseinrichtung drückt. Zusätzlich muss in der Regel erfüllt sein, dass eine Berührposition an einem vorgegebenen Ort oder in einem vorgegebenen Bereich erfasst wird, welcher einem virtuellen Bedienelement zugeordnet ist, und zugleich auch eine Andruckkraft einen vorgegebenen Schwellenwert überschreitet. In diesem Fall findet eine Funktionsauslösung, und, sofern ein Aktor mit der berührungsempfindlichen Positionserfassungseinrichtung direkt oder indirekt gekoppelt ist, auch eine Auslösung einer haptischen Rückkopplung statt. Eine Ausführungsform des Verfahrens sieht somit vor, dass mittels einer mit der Berührfläche in der Bedieneinrichtung gekoppelten Druckkraftmesseinrichtung als einer der Eingabeparameter eine bei der berührenden Betätigung der Berührfläche ausgeübte Andruckkraft erfasst wird, und die mindestens eine Auslösebedingung mindestens eine Andruckkraftvorgabe umfasst und die Erfüllung der mindestens einen Auslösebedingung nur festgestellt wird, dass die als Eingabeparameter erfasste Andruckkraft die Andruckkraftvorgabe erfüllt. Die Bedienvorrichtung weist eine mit der Berührfläche in der Bedieneinrichtung gekoppelte Druckkraftmesseinrichtung auf, welche als einen der Eingabeparameter eine bei der berührenden Betätigung der Berührfläche ausgeübte Andruckkraft erfasst, und die mindestens eine Auslösebedingung mindestens eine Andruckkraftvorgabe umfasst, und die Vergleichereinrichtung ausgebildet ist, die Erfüllung der mindestens einen Auslösebedingung nur festzustellen, wenn beim Vergleichen der erfassten Eingabeparameter mit einer der Auslösebedingung ermittelt wird, dass die als Eingabeparameter erfasste Andruckkraft die Andruckkraftvorgabe erfüllt.

Es ist somit vorteilhaft neben der Berührposition auch die durch ein Betätigungselement senkrecht zur Berührfläche ausgeübte Berührkraft oder Andruckkraft auszuwerten, um dem Nutzer die Bedienung, insbesondere eines virtuellen Bedienelements bei einer Ausführungsform, bei der die Berührfläche transparent ist und vor einer freiprogrammierbaren Anzeigefläche einer Anzeigevorrichtung angeordnet ist, zu erleichtern, für das eine grafische Repräsentation auf der Anzeigefläche dargestellt wird. Es ist bei einigen Ausführungsformen vorgesehen, dass die erfasste Andruckkraft mit einem ersten Kraftschwellenwert verglichen wird und bei einem Erreichen oder Überschreiten des ersten Kraftschwellenwerts durch die erfasste Betätigungskraft oder Andruckkraft ein erstes haptisches Feedback, d. h. eine erste haptische Rückkopplung, über die Berührfläche an den Nutzer zurückübermittelt wird. Diese erste haptische Rückkopplung soll dem Nutzer vermitteln, dass er das virtuelle Bedienelement mit einer ausreichenden Betätigungskraft niederdrückt hat, sodass nun eine Funktionsauslösung erfolgen kann. Ferner wird bei einigen Ausführungsformen die Betätigungskraft oder Andruckkraft mit einem zweiten Kraftschwellenwert verglichen, welcher geringer als der erste Kraftschwellenwert ist. Wird, nachdem der erste Kraftschwellenwert durch die ermittelte Andruckkraft überschritten worden ist, durch die ermittelte Andruck- oder Betätigungskraft wieder unterschritten, so wird eine zweite von der ersten haptischen Rückkopplung, vorzugsweise verschiedene, Rückkopplung über die Berührfläche der berührungsempfindlichen Positionserfassungseinrichtung an den Nutzer ausgegeben. Dieses durch den Nutzer erfahrene Rückkopplungsschema entspricht weitestgehend jenem haptischen Empfinden, welches ein Nutzer bei der Betätigung einer physisch ausgebildeten Taste erfährt. Das erste haptische Feedback korrespondiert beispielsweise mit dem Drücken eines Bedienelements gegen einen Anschlag und das zweite haptische Feedback mit der haptischen Rückkopplung, die beispielsweise durch ein zurückfedern eines elastischen Elements beim Loslassen einer mechanischen Taste auftritt. Der Vorteil besteht darin, dass die Vorrichtung bzw. das Verfahren eine haptische Rückkopplung vermitteln, welche der eines mechanischen Bedienelements möglichst nahe nachempfunden ist, so dass eine Blindbedienung einfach und zuverlässig durch einen Nutzer, insbesondere ohne Blickzuwendung, möglich ist. Um eine solche Ausgestaltung des Bediensystems zu ermöglichen, ist vorgesehen, dass mindestens eine der mehreren Vorlagen neben der mindestens einen Auslösebedingung mindestens eine weitere von der mindestens einen Auslösebedingung verschiede Auslösebedingung umfasst, wobei die verschiedenen Auslösebedingungen mit unterschiedlichen haptischen Rückkopplungen verknüpft sind, wobei die unterschiedlichen haptischen Rückkopplungen unterschiedliche haptische Eindrücke bei einem Nutzer an der Berührfläche hervorrufen. Das Verfahren ist so weitergebildet, dass eine der mehreren Vorlagen neben der mindestens einen Auslösebedingung mindestens eine weitere von der mindestens einen Auslösebedingung verschiede Auslösebedingung umfasst, wobei die verschiedenen Auslösebedingungen mit unterschiedlichen haptischen Rückkopplungen verknüpft sind und die unterschiedlichen haptischen Rückkopplungen unterschiedliche haptische Eindrücke bei einem Nutzer an der Berührfläche hervorrufen, und die erfassten Eingabeparameter mit den verschiedenen Auslösebedingungen vergleichen werden, und somit abhängig davon, welche der Auslösebedingungen erfüllt ist, unterschiedliche haptische Rückkopplungen an der Berührfläche erzeugt werden.

Als besonders vorteilhaft hat es sich erwiesen, neben der haptischen Rückkopplung auch eine akustische Rückkopplung vorzusehen. Hierfür weist eine besonders bevorzugte Ausführungsform der Erfindung einen an oder in dem Gehäuse angeordneten Lautsprecher auf und weist die Steuerung eine Klangerzeugungseinrichtung auf, welche zeitlich synchronisiert zumindest mit einem der Aktor-Aktivierungssignale einen akustischen Klang über den Lautsprecher ausgibt. Eine Ausführungsform sieht somit vor, dass mit der haptischen Rückkopplung an der Bedieneinrichtung ein akustisches Signals ausgegeben wird.

Werden mehrere haptische Rückkopplungen bei einem Bedienvorgang erzeugt, wird vorzugsweise sowohl mit dem der ersten haptischen Rückkopplung als auch mit der zweiten haptischen Rückkopplung jeweils ein akustischer Klang über den Lautsprecher ausgegeben. Bei einer Ausführungsform ist somit vorgesehen, dass sowohl mit der ersten haptischen Rückkopplung als auch mit der zweiten haptischen Rückkopplung jeweils ein Klangsignal zeitlich synchronisiert ausgegeben wird. Die beiden ausgegebenen Klänge sind vorzugsweise für die beiden haptischen Rückkopplungen unterschiedlich ausgestaltet.

Da ein menschlicher Nutzer in der Lage ist, Klangquellen räumlich zu orten, ist es notwendig für eine optimale Nachbildung einer mechanischen Taste durch eine berührungsempfindliche Positionserfassungseinrichtung, die mit einer Anzeigefläche gekoppelt ist, den Klang räumlich nahe der Berührfläche, an der die mechanische Betätigung vorgenommen wird, auszusenden. Daher ist der Lautsprecher vorzugsweise in oder an dem Gehäuse angeordnet, an dem die Berührfläche der berührungsempfindlichen Positionserfassungseinrichtung gelagert ist.

Um eine zeitliche Synchronisation hinsichtlich des Erfassens der haptischen Rückkopplung an der Berührfläche und dem Erfassen des akustischen Klangs zu gewährleisten, weist die Bedienvorrichtung vorzugsweise eine Verzögerungseinrichtung auf, die ein elektronisches Klang-Aktivierungssignal zeitlich gegenüber dem Aktor-Aktivierungssignal so verzögert, dass die für die mechanische Auslenkung der Berührfläche benötigte Zeit durch die relative Verzögerung des elektronischen Klang-Aktivierungssignals gegenüber den Aktor-Aktivierungssignalen ausgeglichen wird, so dass eine maximale Auslenkung der impulsartigen mechanischen Auslenkung zeitgleich mit einem Beginn eines akustischen Klangs, vorzugsweise einen Klangimpuls, ausgegeben wird. Das Klang- Aktivierungssignal bewirkt über den Klanggenerator die Ausgabe des akustischen Klangs oder Klangsignals.

Die zeitliche Synchronisation verbessert die Klangzuordnung zu der haptischen Rückkopplung.

Bei einer Ausführungsform ist die Aktoreinrichtung ausgebildet, die Berührfläche senkrecht zu deren flächiger Ausdehnung impulsartig auszulenken. Ein Vorteil einer solchen Ausgestaltung liegt darin, dass die haptische Rückkopplung entgegen der Betätigungsrichtung wirken kann. Hierdurch kann beispielsweise die Rückkopplung ähnlich wie eine Rückstellkraft eines mechanischen Bedienelements wirken.

Besonders bevorzugt wird die Berührfläche biegesteif ausgebildet. Dies bedeutet, dass eine möglichst geringe Durchbiegung oder lokale Verformung bei einer Betätigung auftritt. Solche Ausführungsformen führen insbesondere bei Aktoren, welche eine Bewegung senkrecht zur flächigen Erstreckung der Berührfläche bewirken dazu, dass die Aktoren größere Kräfte auf die Berührfläche ausüben können müssen als bei Ausführungsformen, bei denen Aktoren die Berührfläche in der Ebene der flächigen Erstreckung und somit senkrecht zur Betätigungsrichtung auslenken.

Bei diesen Ausführungsformen mit Rückkopplungsauslenkung in der Ebene der Berührfläche ist eine "feste" Lagerung in Bedienrichtung einfacher möglich. Eine Aktor-Auslösung hat darüber hinaus kaum einen Einfluss auf die Druckkraftmessung, da bei der Druckkraftmessung nur die Kraft senkrecht zur Bewegungsrichtung der Rückkopplung, nämlich senkrecht zur Berührfläche gemessen wird. Nachteilig an solchen Ausführungsformen kann jedoch sein, dass eine laterale Bewegung, sofern die Berührfläche starr mit der dahinter angeordneten Anzeigefläche gekoppelt ist, und diese somit bei der haptischen Rückkopplung mit ausgelenkt wird, zu einer Störung der optischen Wahrnehmung der auf der Anzeigefläche angezeigten Informationen führt.

Diese Informationen werden dann als bewegt oder unscharf wahrgenommen, was nachteilig ist. Daher ist die Auslenkungsamplitude so zu wählen, dass diese Effekte möglichst minimal bleiben.

Die Berührfläche ist, gegebenenfalls mit der Anzeigefläche der Anzeigevorrichtung, vorzugsweise über Blattfedern an dem Gehäuse gelagert. Um ein Eindringen von Staub und Schmutz in die Vorrichtung zu verhindern, überlappt ein Rahmen des Gehäuses vorzugsweise einen Randbereich der Berührfläche beziehungsweise der mit der Berührfläche gekoppelten Anzeigevorrichtung.

Als besonders geeignete Kraftmesssensoren haben sich Dehnungsmessstreifen erwiesen, die ihren Widerstand abhängig von ihrer Dehnung verändern. Mit einer elektronischen Messschaltung wird der Widerstand eines Messstreifens ermittelt und ein die Andruckkraft repräsentierendes elektronisches Signal erzeugt. Dieses ist bei einer bevorzugten Ausführungsform so ausgestaltet, dass eine Signalstärke proportional zur ermittelten Andruckkraft ist. Bei bevorzugten Ausführungsformen, welche Dehnungsmessstreifen verwenden, werden mehrere Dehnungsmessstreifen an den mehreren Lagerungsstellen der Berührfläche mit dem Gehäuse angeordnet und gemeinsam oder einzeln ausgewertet.

Bei anderen Ausführungsformen ist mit der Berührfläche beispielsweise ein Stößel gekoppelt, der bei einer berührenden Betätigung eine Auslenkung in Betätigungsrichtung erfährt. Über den Stößel wird eine Kondensatorelektrode ausgelenkt, so dass sich eine Kapazität eines Kondensators abhängig von der durch den Stößel übertragenen Andruckkraft ändert. Über eine elektronische Schaltung wird erneut ein Kraftsignal erzeugt. Auch hier sind Ausführungsformen denkbar, die mehrere solcher Kraftmesssensoren auswerten.

Wieder andere Ausführungsformen messen die Andruckkraft induktiv. Bei einem induktiven Kraftmesssensor ist beispielsweise eine Topfmagnet mit der Berührfläche starr gekoppelt, welcher in eine Spule hineinragt. Bei einer Auslenkung der Berührfläche wird der Topfmagnet entlang der Spulenachse bewegt und bewirkt so eine Induktion in der Spule. Über den induzierten Strom ist es möglich, die die Bewegung des Topfmagnets auslösende Kraft zu ermitteln. Vorteil einer solchen Ausführungsform ist es, dass dieselbe Anordnung, welche zur Kraftmessung verwendet wird, auch als Aktor verwendet werden kann, indem die Spule gezielt bestromt wird.

Bevorzugte Ausführungsformen weisen mehrerer solcher induktiven Aktor-Sensoreinrichtungen auf, welche beispielsweise in den vier Ecken einer rechteckig ausgebildeten Berührfläche, an der Rückseite der Berührfläche, beziehungsweise einer Rückseite der dahinter angeordneten Anzeigevorrichtung angeordnet sind.

Andere Ausführungsformen können Piezo-Sensoren zur Ermittlung der Kraft vorsehen.

Auch Aktoreinrichtungen mit Aktoren, welche eine Auslenkung parallel zur Berührungsfläche bewirken, sind vorzugsweise als elektromechanische Aktoren ausgebildet. Die Aktor-Aktivierungssignale oder hieraus abgeleitete Ansteuerungssignale für den oder die Aktoren sowie die Aktoren und die Lagerung der Berührfläche werden vorzugsweise so ausgestaltet, dass die Rückkopplungsimpulse, welche für die verschiedenen haptischen Rückkopplungen verwendet werden, möglichst nur eine einzige Auslenkung und Rückkehr in die Ruhelage mit gegebenenfalls einem sehr stark gedämpften Überschwinger auslösen. Unterschiedliche haptische Rückkopplungen können somit über eine Stärke der Auslenkung aber auch über eine Dauer der Auslenkung unterschiedlich ausgestaltetet werden.

In der Regel wird über eine solche Bedienvorrichtung eine Vielzahl von Funktionen zeitgleich zur Bedienung angeboten, so dass die Anzeigevorrichtung ausgebildet ist, mehrere virtuelle Bedienelemente zeitgleich darzustellen. Jedem virtuellen Bedienelement ist dann ein Auslösebereich zugeordnet. Anhand der erfassten Berührposition kann von er Bedienlogik er Zentralsteuereinrichtung ermittelt werden, welches virtuelle Bedienelement der Nutzer mit dem Betätigungselement betätigen will und die dem entsprechenden virtuellen Bedienelement zugeordnete Funktion selektiert werden. Für die Haptiksteuereinrichtung ist die Unterscheidung nicht unbedingt notwendig, wenn beispielsweise die zugeordnete Kraftschwelle oder die zugeordneten Kraftschwellen für alle virtuellen Bedienelemente gleich sind.

Bei einigen Ausführungsformen der Bedienvorrichtung wird die Funktionsauslösung von der Zentralsteuereinrichtung bereits beim Überschreiten der ersten Kraftschwelle vorgenommen.

Bevorzugt werden jedoch Ausführungsformen der Bedienvorrichtung, bei denen die Funktionsauslösung von der Zentralsteuereinrichtung erst beim Unterschreiten der zweiten Kraftschwelle ausgelöst wird.

Um eine Auslösebedingung für eine haptische Rückkopplung beim Unterschreiten der zweiten Kraftschwelle zu erstellen ist es notwendig, die Andruckkraft zu unterschiedlichen Zeitpunkten auszuwerten. Da die zweite Kraftschwelle, die eine Freigabekraftschelle ist, welche mit dem Freigeben bzw. Loslassen einer Taste oder eines virtuellen Bedienelements assoziierbar ist, geringer ist als die erste Kraftschwelle, die mit der Anwahl der Funktion verknüpft ist, die dem entsprechenden Auslösebereich oder dem virtuellen Bedienelement zugeordnet ist, in dessen Gebiet die Berührung erfolgt, soll eine Funktionsauslösung beim Unterschreiten der zweiten Kraftschwelle nur erfolgen, wenn zuvor die erste Kraftschwelle überschritten wurde. Eine Ausführungsform sieht somit vor, dass die mindestens eine Auslösebedingung und/oder die mindestens eine weitere Auslösebedingung eine Verlaufsvorgabe, beispielsweise eine Verlaufsandruckkraftvorgabe, umfassen, die Vorgaben für zu unterschiedlichen Zeitpunkten erfasste Eingabeparameter, beispielsweise für die als Eingabeparameter zu unterschiedlichen Zeitpunkten erfassten Andruckkräfte, umfasst, und die Vergleichseinrichtung ausgebildet ist, zu unterschiedlichen Zeitpunkten erfassten Eingabeparameter, beispielsweise als Eingabeparameter erfasste Andruckkräfte, mit den Vorgaben der Verlaufsvorgabe, beispielsweise der Verlaufsandruckkraftvorgabe, zu vergleichen und die Erfüllung der mindestens einen Auslösebedingung und/oder der mindestens einen weiteren Auslösebedingung nur festzustellen, wenn beim Vergleichen der erfassten Eingabeparameter mit einer der Auslösebedingung ermittelt wird, dass die zu unterschiedlichen Zeitpunkten erfassten Eingabeparameter, beispielsweise die als Eingabeparameter zu unterschiedlichen Zeitpunkten erfassten Andruckkräfte, die Vorgaben der Verlaufsvorgabe, beispielsweise der Verlaufsandruckkraftvorgabe, zu den unterschiedlichen Zeitpunkten erfüllen.

Eine Ausführungsform des Verfahrens sieht vor, dass die mindestens eine Auslösebedingung und/oder die mindestens eine weitere Auslösebedingung eine Verlaufsvorgabe umfassen, die Vorgaben für die zu unterschiedlichen Zeitpunkten erfassten als Eingabeparameter umfasst, und die zeitlich zu unterschiedlichen Zeitpunkten erfassten Eingabeparameter mit den Vorgaben der Verlaufsvorgabe verglichen werden und die Erfüllung der mindestens einen Auslösebedingung und oder der mindestens einen weiteren Auslösebedingung nur festgestellt wird, wenn beim Vergleichen der erfassten Eingabeparameter mit einer der Auslösebedingung ermittelt wird, dass die zu unterschiedlichen Zeitpunkten erfassten Eingabeparameter die Vorgaben der Verlaufsvorgabe zu den unterschiedlichen Zeitpunkten erfüllen.

Eine solche Ausführungsform ist in der Lage, auch Benutzerschnittstellen umzusetzen, bei der zusätzlich die zeitlich im Zusammenhang erfassten Berührpositionen zu Berührspuren zusammengefasst werden und diese Berührspuren oder Abschnitte hiervon gegenüber vorgegebenen Berührgesten klassifiziert werden. Wird eine Berührspur als eine Berührgeste klassifiziert, so kann eine mit der Berührgeste verknüpfte Funktion ausgelöst werden. Insbesondere können so Funktionen wie ein Vergrößern und/oder Verkleinern der grafischen Darstellung (Zoomen), ein Blättern in Listen etc. realisiert werden. Die einzelnen Listeneinträge können hingegen virtuelle Bedienelemente sein, deren Betätigung das oben beschriebene haptische Feedback auslöst. Die Verlaufsvorgabe kann somit eine Verlaufspositionsvorgabe sein, die festlegt, dass im zeitlichen Zusammenhang erfasste Berührpositionen, die eine gerade Strecke einer Mindestlänge bilden, die in einer vorgegebenen Zeitspanneerfasst sind, eine solche Berührgeste darstellen, für die eine haptische Rückkopplung erzeugt wird. Ohne eine Geste als solche analysieren zu müssen, kann die Haptiksteuereinrichtung anhand weniger Vorgaben ermitteln, ob eine haptische Rückkopplung erfolgen soll oder nicht.

Sind über die Bedienvorrichtung eine Vielzahl von verschiedenen Funktionen bedienbar und auslösbar, so ist eine aufwendige Logik notwendig, um die der zugrundeliegenden Bedienlogik einer Mensch-Maschine-Schnittstelle (HMI-human machine interface) umzusetzen. Diese wird in einem Zentralrechner programmgesteuert im Zusammenwirken mit einer zentralen Prozessoreinrichtung umgesetzt. Diese sind in der Zentralsteuereinrichtung ausgebildet. Die Anzeigevorrichtung und die berührungsempfindliche Positionserfassungseinrichtung weisen jeweils eine eigene Steuereinrichtung auf, welche räumlich benachbart zu der Berührfläche beziehungsweise der Anzeigefläche angeordnet sind. Auch die Haptiksteuereinheit ist eine solche lokale Steuereinrichtung der Bedieneinrichtung. Die gesamte Steuerung der Bedienvorrichtung ist somit zwischen diesen lokalen Steuereinrichtungen der Bedieneinrichtung und einem über ein BUS-System hiermit gekoppelten Zentralrechner der Zentralsteuereinrichtung aufgeteilt.

Eine Ausführungsform der Bedienvorrichtung sieht somit vor, dass die Bedieneinrichtung und die Zentralsteuereinrichtung über einen seriellen Datenbus zum Übermitteln der erfassten Eingabeparameter und Übertragen des Vorlagensignals informationstechnisch verbunden sind.

Alternativ oder zusätzlich zum Erzeugen eine haptischen Rückkopplung beim Über- und/oder Unterschreiten einer Kraftschwelle kann bei einigen Ausführungsformen vorgesehen sein, dass ein weiteres haptisches Feedback beim Betreten und/oder Verlassen eines virtuellen Bedienelements, insbesondere bei einer streifenden Berührung der Berührfläche ausgegeben wird. So ist ein Auffinden der betätigbaren Bedienelemente ohne Blickzuwendung einfacher möglich. Hierbei können sich die haptischen Rückkopplungen für das Betreten und Verlassen eines virtuellen Bedienelements unterscheiden.

Ein Nutzer kann so beide Vorgänge haptisch unterscheiden. Die Rückkopplungen unterscheiden sich ferner vorzugsweise von denen, die bei der Betätigung des virtuellen Bedienelements erzeugt werden. Als Betreten eines virtuellen Bedienelements wird das erstmalige erfassen einer Berührposition in einem Auslösebereich des Bedienelements verstanden, nachdem zuvor erfasste Berührpositionen, sofern solche in einem vorausgehenden vorfestgelegten Zeitintervall überhaupt erfasst wurden, nicht in diesem Auslösebereich lagen. Umgekehrt ist das Verlassen festgestellt, wenn die Berührposition nicht mehr in dem Auslösebereich des virtuellen Bedienelements erfasst wird, indem zuvor Berührpositionen des Betätigungselements erfasst wurden. Bei einigen Ausführungsformen werden auch ein erstmaliges Berühren der Berührfläche in einem Auslösebereich als Betreten und ein Beenden der Berührung, die zuvor in einem Auslösebereich erfolgte, als Verlassen aufgefasst. Andere Ausführungsformen nehmen diese beiden Fälle aus.

Ein sehr geringes Datenaustauschvolumen zwischen der Zentralsteuereinrichtung und der Haptiksteuereinrichtung tritt bei Ausführungsformen auf, bei denen in einer Speichereinrichtung der Haptiksteuereinrichtung die mehreren Vorlagen gespeichert sind und eine Auswahl der aktuellen Vorlage durch eine Übermittlung einer Kennung an die Bedieneinrichtung erfolgt, die eine der Vorlagen identifiziert. Die Übermittlung einer Kennung ist in solchen Fällen ausreichend.

Eine größere Flexibilität hinsichtlich der der Anpassung der Vorlagen an den aktuellen Bedienkontext ist mit Ausführungsformen erreichbar, bei denen mindestens eine Vorlage parametrisiert ist, und neben der die Vorlage identifizierenden Kennung noch Bedingungsparameter übertragen werden. Solche Vorlagen kennen beispielsweise parametrierbare virtuelle Bedienelemente, d.h. parametrierbare Auslösebereiche, die beispielsweise durch eine Positionsangabe auf der Berührfläche und eine Größe parametriert werden. Alternativ können bei rechteckigen Auslösebereichen die Koordinaten diagonal gegenüberliegender Eckpunkte zur Parametrierung genutzt werden. Zusätzlich kann einem solchen Auslösebereich eine Kraftschwelle zugeordnet werden, die für ein Anwählen oder Auslösen einer Funktion überschritten werden muss. Ferner wird die Art der haptischen Rückkopplung, d.h. dessen Stärke, Dauer, Signalform etc. festgelegt. Als Signalformen kommen beispielsweise ein Einzelimpuls, Doppelimpulse, eine Vibration etc. in Frage. In der Regel sind mehrere verschieden Typen haptischer Rückkopplungen bereits vordefiniert in der Haptiksteuereinrichtung hinterlegt, so dass beim Parametrieren nur noch ein Typ einer haptischen Rückkopplung ausgewählt wird. Weitere Parameter können eine akustische Ausgabe, d.h. ein Klangsignal parametrieren.

Auch hier sind in der Regel Klangsampels, kurze Klangaufzeichnungen, in der Haptiksteuereinrichtung oder einer Akustiksteuereinrichtung oder einem Klangerzeuger hinterlegt. Oft existiert eine feste Zuordnung zwischen den verschiedenen Typen haptischer Rückkopplung und den Klangsignalen, d.h. Klangaufzeichnungen etc. Über solche Parameter können für eine Vorlage somit ein oder mehrere Auslösebedingungen parametriert werden. Hierbei können die Auslösebereiche mehrerer virtueller Bedienelemente, bei deren Betätigung abhängig von der selben Kraftschwelle dieselbe haptische und gegebenenfalls auch dieselbe akustische Rückkopplung erzeugt werden soll, zu einem gemeinsamen Auslösebereich zusammengefasst und in einer Auslösebedingung berücksichtigt werden.

Derselbe Auslösebereich kann mit einer Verlaufsvorgabe verknüpft sein, um eine haptische Rückkopplung zu erzeugen, die beim Freigeben des virtuellen Bedienelements, ausgegeben wird. Die Verlaufsvorgabe fordert beispielsweise, dass zunächst eine erste Anwahlkraftschwelle erreicht oder überschritten wird und zeitlich nachfolgend eine Freigabekraftschwelle unterschritten wird, wobei die Freigabekraftschwelle geringer als die Anwahlkraftschwelle ist. Ein und derselbe Auslösebereich kann somit Basis für eine Vielzahl von Auslösebedingungen sein. Weitere Auslösebedingungen können mit haptischen Rückkopplungen beim Betreten des Auslösebereichs (erstmaliges Berühren der Berührfläche in dem Auslösebereich oder Hineingleiten in den Auslösebereich), dem Verlassen des Auslösebereichs (Abheben oder Herausgleiten des Betätigungselements), dem Überschreiten einer zweiten Anwahlkraftschwelle etc. verbunden sein. Die haptischen Rückkopplungen sind für die verschiedenen Ereignisse vorteilhafterweise unterschiedlich, um eine Blindbedienung zu verbessern und zu erleichtern.

Bei einer Weiterbildung kann vorgesehen sein, dass das Vorlagesignal so erzeugt wird, dass in der Haptiksteuereinrichtung mindestens eine Auslösebedingung für die aktuelle Vorgabe anhand von übermittelten Bedingungsparametern modifiziert oder erzeugt wird, so dass die mindestens eine Auslösebedingung an den aktuellen Bedienkontext angepasst ist.

Die Erfindung bietet den entscheidenden Vorteil, dass die Ansteuerung der Aktoreinrichtung zum Bewirken einer haptischen Rückkopplung unabhängig von der Auswertung der Bedienlogik in der Zentralsteuereinrichtung lokal in der Bedieneinrichtung vorgenommen wird. Somit wird eine geringe Latenzzeit zwischen auslösendem Betätigungsereignis und haptischer Rückkopplung erreicht.

Nachfolgend wird die Erfindung unter Bezugnahme auf eine Zeichnung näher erläutert. Hierbei zeigen:
- Fig. 1: eine schematische Darstellung einer Bedienvorrichtung und deren Anordnung in einem Kraftfahrzeug;
- Fig. 2: eine schematische Darstellung einer Haptiksteuerung;
- Fig. 3: eine schematische Explosionsansicht einzelner Bestandteile einer Bedieneinrichtung;
- Fig. 4: eine schematische Ansicht eines Touchscreens mit Teilen der Haltevorrichtung;
- Fig. 5: eine schematische Ansicht einer Ausführungsform einer Vorrichtung, bei der eine Aktorik in der Betätigungsrichtung wirkt, wobei ein Touchscreen aus Veranschaulichungsgründen nicht enthalten ist;
- Fig. 6: eine schematische Darstellung einer Ansteuerelektronik und einer Halterungsplatte;
- Fig. 7: eine perspektivische Rückansicht einer zusammengebauten Bedieneinrichtung;
- Fig. 8: eine schematische Darstellung zur Erläuterung der Kraftmessung mit Dehnungsmessstreifen;
- Fig. 9: eine weitere perspektivische Ansicht zur Erläuterung der Kraftmessung über Dehnungsmessstreifen;
- Fig. 10: eine schematische Darstellung zur Erläuterung der Kraftmessung über ein induktives Messverfahren;
- Fig. 11: eine schematische Darstellung zur Erläuterung einer Druckkraftmessung über einen Plattenkondensator;
- Fig. 12: eine schematische Darstellung der benötigten Andruckkraft, welche zum Bewirken einer Auslenkung notwendig ist;
- Fig. 13: eine schematische Darstellung zur Erläuterung der bei einer Bedienung auftretenden Betätigungskräfte aufgetragen gegen die Zeit sowie eine Zuordnung der Auslenkung zu den auftretenden Kräften;
- Fig. 14: eine schematische Darstellung zur Erläuterung des Aktoransteuerungssignals und der sich daraus ergebenden Auslenkung der Berührfläche sowie die zeitliche Synchronisation eines Klangsignals;
- Fig. 15a, 15b: unterschiedliche sich ergebende Auslenkungskurven der Berührfläche für unterschiedliche Dämpfungen;
- Fig. 16: eine schematische Darstellung zur Erläuterung der Aufteilung der Steuerung auf unterschiedliche Steuerungseinrichtungen,
- Fig. 17: eine schematische, beispielhafte Ausführungsform der Bedienvorrichtung;
- Fig. 18: eine schematische Darstellung zur Erläuterung der Realisierung einer Bedienvorrichtung, bei welcher eine aufwendige Mensch-Maschine-Schnittstellen-Logik der Zentralsteuereinrichtung die Haptikauslösung übernimmt;
- Fig. 19: eine Gegenüberstellung der auftretenden Latenzzeiten für eine Ausführungsform, bei der die Haptiksteuerung lokal in einzelnen Steuereinrichtungen ohne Verwendung eines Zentralrechners realisiert ist, und einer Steuerung, bei welcher der Zentralrechner die Haptik steuert;
- Fig. 20: eine schematische Darstellung der ausgetauschten Nachrichtendiagramme bei einer Ausführungsform bei der die Haptiksteuerung mit einem Zentralrechner ausgeführt wird;
- Fig. 21: eine schematische Darstellung der Nachrichten, einer Ausführungsform, bei der die Steuerung der haptischen Rückkopplung in lokalen Steuereinrichtungen der Bedieneinrichtung realisiert ist; und
- Fig. 22: eine schematisch Darstellung von Vorlagen.

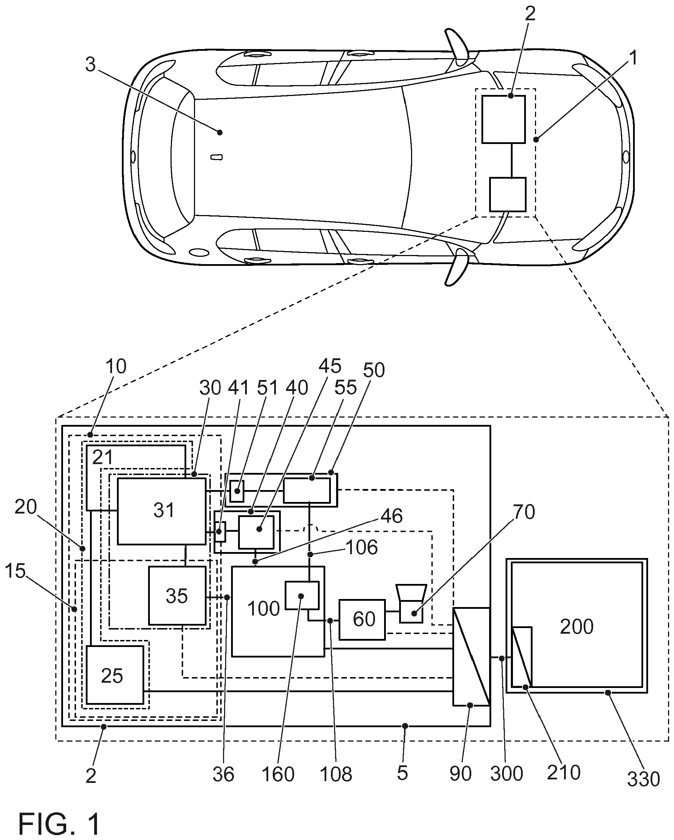

In Fig. 1 schematisch ein Kraftfahrzeug 3 mit einer Bedienvorrichtung 1 schematisch dargestellt. Die Bedienvorrichtung 1 umfasst eine Bedieneinrichtung 2 mit einem Gehäuse 5, welches in der Regel im Bereich des Armaturenbretts aber besonders bevorzugt in einer Mittelkonsole angeordnet ist. In dem Gehäuse ist ein Touchscreen 10 angeordnet, der eine frei programmierbare Anzeigevorrichtung 20 und eine damit verknüpfte berührungsempfindliche Positionserfassungseinrichtung 30 umfasst. Bei den meisten Ausführungsformen ist eine Anzeigefläche 21 der frei programmierbaren Anzeigevorrichtung 20 fest mit einer Berührfläche 31 der berührungsempfindlichen Positionserfassungseinrichtung 30 verbunden. In jedem Fall ist zumindest die Berührfläche 31 der berührungsempfindlichen Positionserfassungseinrichtung 30 beweglich gegenüber dem Gehäuse 5, vorzugsweise elastisch, gelagert.

Eine Anzeigesteuereinrichtung 25 steuert die Darstellung von Informationen auf der Anzeigefläche 21. Eine Positionserfassungssteuereinrichtung 35 ist so ausgebildet, dass diese Koordinaten für erfasste Berührpositionen einer berührenden Betätigung der Berührfläche 31 durch ein Betätigungselement (nicht dargestellt) ermittelt. Diese Koordinaten bzw. die Berührposition stellen Eingabeparameter dar. Die Berührfläche 31 ist transparent und kann in die Anzeigefläche 21 integriert sein. Durch die Berührfläche 31 hindurch sind somit die auf der Anzeigefläche 21 dargestellten Informationen, beispielsweise grafische Schriftzeichen, Piktogramme, grafische Darstellungen von Bedienelementen und Ähnliches, sichtbar.

Mit der Berührfläche 31 oder, falls die Berührfläche mit der frei programmierbaren Anzeigevorrichtung 20 fest verbunden ist, mit dem Touchscreen 10 ist eine Druckkraftmesseinrichtung 40 gekoppelt, welcher in der Lage ist, bei einer berührenden Betätigung eine senkrecht zur Berührfläche 31 auf diese einwirkende Betätigungskraft zu messen. Beispielsweise können mit der Berührfläche 31 ein oder mehrere Sensorelemente 41 verbunden sein, welche bei einer Auslenkung der Berührfläche 31 ein Signal erzeugen, welches von einer Druckmesssteuereinrichtung 45 in ein Druckkraftsignal 46 gewandelt wird, welches die ermittelte Andruckkraft oder Betätigungskraft angibt. Auch die ermittelte Andruckkraft stellt einen Eingabeparameter dar. Ferner ist mit der Berührfläche 31 oder, sofern die Berührfläche 31 fest mit der Anzeigefläche 21 verbunden ist, mit dem Touchscreen 10 mindestens eine Aktoreinrichtung 50 gekoppelt, die einen Aktor 51 umfasst, der von einer Aktor-Steuereinrichtung 55 gesteuert wird.

Die Bedienvorrichtung 1 umfasst ferner eine in dem Gehäuse 5 angeordnete Haptik-Steuereinrichtung 100, welche zumindest mit der Druckmesssteuereinrichtung 45, d. h. der Druckkraftmesseinrichtung 40, und der Aktor-Steuereinrichtung 55, d. h. mit der Aktoreinrichtung 50, verbunden ist. Die Haptik-Steuereinrichtung 100 ist ausgebildet, anhand der erfassten Eingabeparameter, z.B. der erfassten Andruckkräfte und/oder der erfassten Berührpositionen, Aktor-Aktivierungssignale 106 zu erzeugen, die dann von der Aktorsteuerung 55 so umgesetzt werden, dass der Aktor 51 die Berührfläche 31 der berührungsempfindlichen Positionserfassungseinrichtung 30 auslenkt, so dass ein haptisch wahrnehmbarer Effekt entsteht. Dieses wird als haptische Rückkopplung bezeichnet.

Allgemein überprüft die Haptiksteuereinrichtung, ob die erfassten Eingabeparameter, die in einer oder mehreren Auslösebedingungen enthaltenen Vorgaben erfüllen. Ist eine Auslösebedingung erfüllt, wird die entsprechende zugeordnete haptische Rückkopplung ausgelöst.

Bei der einfachsten Ausführungsform prüft die Haptiksteuereinrichtung 100 die erfasste Andruckkraft oder Betätigungskraft gegenüber einer ersten Kraftschwelle bzw. einem erste Kraftschwellenwert. Wird diese Kraftschwelle bzw. der erste Kraftschwellenwert erreicht oder überschritten, so wird ein erstes Aktor-Aktivierungssignal 106 erzeugt, welches eine erste haptische Rückkopplung über die Aktor-Steuereinrichtung 55 und den Aktor 51 an der Berührfläche 31 bewirkt. Wird anschließend nachdem die erste Kraftschwelle bzw. der erste Kraftschwellenwert durch die erfasste Andruck- oder Betätigungskraft einmal erreicht oder überschritten wurde, eine zweite Kraftschwelle bzw. ein zweiter Kraftschwellenwert, welcher geringer als der erste Kraftschwellenwert ist, unterschritten, wird ein zweites Aktor-Aktivierungssignal 106 erzeugt, welches über die Aktor-Steuereinrichtung 55 und den Aktor 51 einen zweiten haptischen erfassbaren Effekt an der Berührfläche 51 bewirkt. Vorzugsweise sind die beiden erfassbaren haptisch Effekte unterschiedlich, so dass ein Nutzer diese unterscheiden kann. Besonders bevorzugt sind die haptischen Effekte als kurze möglichst einmalige Auslenkungen der Berührfläche ausgeführt. Diese unterscheiden sich vorzugsweise hinsichtlich der Auslenkungsamplitude, wobei die Auslenkungsamplitude bei dem haptischen Effekt, welcher durch das erste Aktor-Aktivierungssignal erzeugt wird, vorzugsweise größer als bei dem haptischen Effekt ist, der durch das zweite Aktor-Aktivierungssignal ausgelöst wird.

Die mit der ersten haptischen Rückkopplung verknüpfte Auslösebedingung prüft bei einer einfachen Ausführungsform lediglich, ob die als Eingabeparameter erfasste Andruckkraft bei der Betätigung der Berührfläche die erste Kraftschwelle erreicht oder überschreitet.

Ist dieses der Fall ist, die erste Auslösebedingung erfüllt und die erste haptische Rückkopplung wird ausgelöst.

Die mit der zweiten haptischen Rückkopplung verknüpfte Auslösebedingung, umfasst eine Verlaufsvorgabe. Die Verlaufsvorgabe enthält Vorgaben für einen oder mehrere Eingabeparameter zu unterschiedlichen Zeitpunkten. Im angegebenen Beispiel ist die zeitlich erste Vorgabe, dass die Andruckkraft die erste Kraftschwelle erreicht oder überschreitet. Die zeitlich nachfolgende Vorgabe fordert ein Unterschreiten der zweiten Kraftschwelle, welche geringer als die erste Kraftschwelle ist. Eine haptische Rückkopplung, die mit dem "Freigeben" /"Loslassen" der betätigten Berührfläche verknüpft ist, soll nämlich nur erfolgen, wenn zuvor die erste Kraftschwelle überschritten wurde und die erste haptische Rückkopplug ausgegeben wurde.

Die zu einem Zeitpunkt oder Bedienkontext der Bedienvorrichtung zugeordneten Auslösebedingungen sind jeweils in einer Vorlage (englisch template) zusammengefasst. Die aktuell gültigen Auslösebedingungen sind entsprechend in einer aktuellen Vorlage zusammengefasst.

Um die sensorische Wahrnehmung durch einen Nutzer zu verbessern, insbesondere um Tastenbedienelemente besser durch den Touchscreen 10 nachbilden zu können, wird vorzugsweise durch die Haptik-Steuerung 100 auch jeweils ein Klang-Aktivierungssignal 108 an einen Klanggenerator 60 ausgegeben, der über einen an oder in dem Gehäuse angeordneten Lautsprecher 70 synchronisiert mit der über den Aktor 51 bewirkten Auslenkung der Berührfläche 31 ein Klangsignal oder einen Klang ausgibt. Hierbei ist vorzugsweise in der Haptik-Steuereinrichtung 100 eine Verzögerungseinrichtung 160 vorgesehen, welche das entsprechende Aktor-Aktivierungssignal 106 und das Klang-Aktivierungssignal 108 gegeneinander so verzögert, dass eine maximale Auslenkung der Berührfläche 31 zeitgleich mit dem Ausgeben des Klangsignals erfolgt. Durch die Ausgabe des Klangsignals zeitlich synchronisiert mit den haptischen Rückkopplungen wird eine dem Nutzer vertraute sensorische Wahrnehmung einer Tastenbedienung besser nachgebildet. Hierbei ist durch die Anordnung des Lautsprechers 70 an oder in dem Gehäuse 5 gewährleistet, dass der Nutzer aufgrund seines räumlichen Hörvermögens das ausgegebene akustische Klangsignal mit dem haptischen Effekt korreliert, da dieses als von dem Ort der Berührung kommend wahrgenommen wird. Der Rückkopplungseffekt wird gestärkt. Es hat sich gezeigt, dass die Rückkopplung, welche durch ein lokal benachbart zu der Berührfläche ausgegebenes akustisches Klangsignal unterstützt ist, als intensive Rückkopplung wahrgenommen wird.

Es hat sich ebenfalls ergeben, dass eine haptische Rückkopplung mit einer reduzierten mechanischen Auslenkung, die durch ein lokal synchronisiert ausgegebenes Klangsignal ergänzt ist, genauso intensiv wahrgenommen wird, wie eine Rückkopplung mit erhöhter mechanisierter Auslenkung ohne Klangunterstützung. Es kann somit ein schwächerer Aktor eingesetzt werden, wenn eine synchronisierte, lokal ausgegebene Klangunterstützung genutzt wird. Hierdurch wird ferner der Verschleiß aufgrund geringerer Auslenkung der Berührfläche bei einem nahezu genauso intensiv durch einen Nutzer wahrgenommen Rückkopplungseffekt minimiert.

Eine solche einfach Ausführungsform weist den Nachteil auf, dass eine haptische Rückkopplung bei einer berührenden Betätigung an jeder Position ausgegeben wird, unabhängig davon, ob dieser Position auf der Anzeigefläche über eine Mensch-Maschine-Benutzerschnittstelle ein Auslösebereich eines virtuellen Bedienelements zugeordnet ist.

Bei einer weiter bevorzugten Ausführungsform ist daher die Haptik-Steuereinrichtung 100 vorzugsweise ebenfalls mit der Positionserfassungssteuereinrichtung 35 gekoppelt, so dass die Haptik-Steuereinrichtung 100 zusätzlich prüft, ob die als Eingabeparameter erfasste Berührposition in einem Auslösebereich eines virtuellen Bedienelements liegt. Ist dies der Fall, so erfolgt eine Ausgabe der Aktor-Aktivierungssignale 106 und gegebenenfalls der Klang-Aktivierungssignale 108 bei Überschreiten der ersten Kraftschwelle bzw. des ersten Kraftschwellenwerts und bei dem nachfolgenden Unterschreiten der zweiten Kraftschwelle bzw. des zweiten Kraftschwellenwerts. Zusätzlich kann die Haptik-Steuereinrichtung 100 so ausgebildet sein, dass sie anhand der erfassten Berührposition ermittelt, ob die erfasste Berührposition in einem Auslösebereich einer Auslösebedingung liegt, und ferner ermittelt, ob die erste Kraftschwelle durch die erfasste Andruckkraft erreicht oder überschritten wird. Ist dieses der Fall wird die dem entsprechenden Auslösebereich zugeordnete haptische und gegebenenfalls auch akustische Rückkopplung ausgelöst. Es ist möglich, dass die Haptik-Steuereinrichtung 100 ein Signal, welches die Auslösung der haptischen Rückkopplung anzeigt, zu informationszwecken über eine Schnittstellt 90 zu der Zentralsteuereinrichtung 330ausgibt.

Die Bedienlogik, d.h. die Mensch-Maschinen-Schnittstellen-Logik ist nicht in der Haptik-Steuereinrichtung 100 der Bedieneinrichtung umgesetzt, sondern in einem Zentralrechner 200 einer Zentralsteuereinrichtung 330, wobei der Zentralrechner 200 der über eine Zentralrechnerschnittstelle 210 und einen Bus 300 mit der Schnittstelle 90 der Bedieneinrichtung 2 verbunden ist.

Der Zentralrechner 200 übermittelt ein Vorlagesignal, um eine von mehreren in dem Speicher 133 der Haptiksteuereinrichtung abgelegten Vorlagen als aktuelle Vorlage auszuwählen. Hierdurch werden mit minimalem Datenaustausch, beispielsweise einer die Vorlage identifizierenden Kennung, die notwendigen Informationen über die Aktivierungsbereiche der einzelnen virtuellen Bedienelemente, für die bei einer berührenden Betätigung mit der ausreichenden Andruckkraft, wie oben erläutert, die beispielsweise zwei verschiedenen haptischen Rückkopplungseffekte ausgegeben werden sollen, der Haptiksteuereinrichtung bereitgestellt. Somit ist die Haptik-Steuerung unabhängig von einer Übertragungsdauer von Information, insbesondere der der fassten Eingabeparameter, an den Zentralrechner und dessen Verarbeitungszeit sowie Rückübertragungszeit von Informationen in der Lage, zeitnah die haptischen Rückkopplungen zu erzeugen, sofern die erfassten Eingabeparameter eine der Auslösebedingungen der aktuellen Vorlage erfüllen, beispielswiese die erfasste Berührposition innerhalb eines der Auslösungsbereiche erkannt wird, während die erste Kraftschwelle überschritten bzw. die zweite Kraftschwelle nach dem vorherigen überschreiten der ersten Kraftschwelle unterschritten wird.

Zusätzlich zur Auswertung für die Haptiksteuerung werden die erfassten Eingabeparameter, beispielsweise die ermittelten Andruckkraftwerte sowie erfassten Berührpositionen, von der Bedieneinrichtung 2 an den Zentralrechner 200 übermittelt. Der Zentralrechner 200 wertet dann die Eingabeparameter dahingehend aus, ob und welche Fahrzeugfunktion ausgelöst werden soll oder welches Fahrzeugsystem gesteuert oder bedient werden soll. Es sei hier angemerkt, dass die Bedienlogik, die softwaretechnisch in dem Zentralrechner umgesetzt ist, Funktionsauslösungen bewirken kann, die nicht mit einer haptischen Rückkopplung verknüpft sind. Ein streifend über die Berührfläche geführtes Betätigungselement kann beispielsweise mit einer Fahrzeugfunktion verknüpft sein, die bei dieser Art von Betätigung ausgelöst oder hierüber bedient wird, ohne dass eine haptische Rückkopplung erfolgt. Die Auswertung der Eingabeparameter wird im Zentralrechner 200 somit in der Regel teilweise gleich oder ähnlich sein, kann jedoch auch verschieden von der der Haptiksteuereinrichtung 100 sein.

Das bewirken der haptischen Rückkopplung erfolgt in der Regel indem ein Aktor-Aktivierungssignal von der Haptik-Steuereinrichtung 100 zu der Aktor-Steuereinrichtung 55 übertragen wird. Analog kann zusätzlich ein Klang-Aktivierungssignal von der Haptik-Steuereinrichtung 100 an den Klanggenerator 60 übermittelt werden. Vorzugsweise werden lediglich Aktivierungsinformationen übermittelt und die konkreten Ansteuersignale in der Aktor-Steuereinrichtung 55 bzw. die an die Lautsprecher 70 ausgegebenen Klangsignale in dem Klangerzeuger 60 erzeugt.

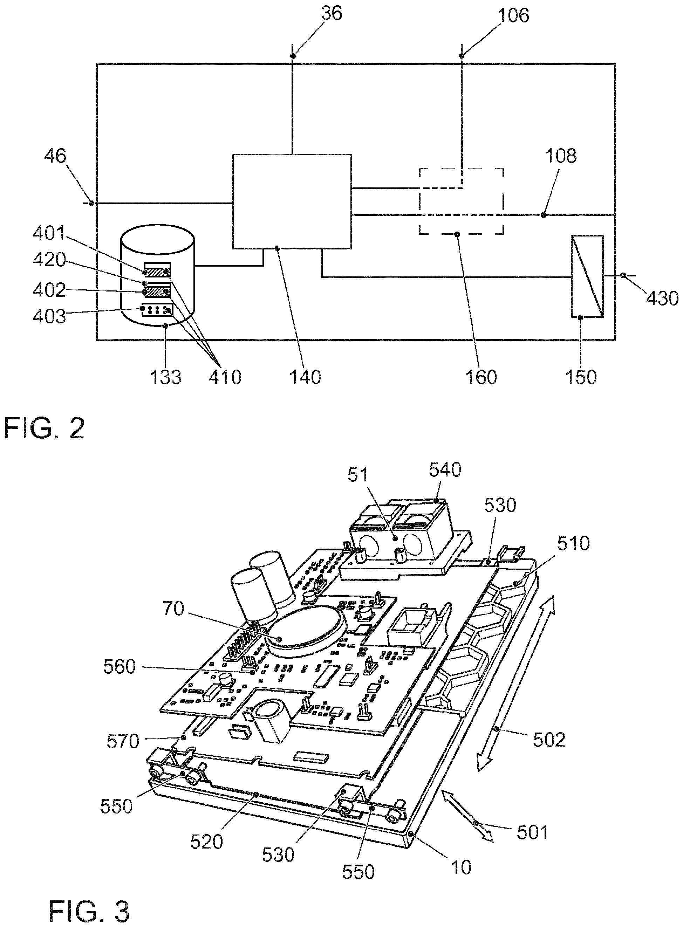

In Fig. 2 ist schematisch eine Ausführungsform einer Haptik-Steuereinrichtung 100 dargestellt. Die Haptiksteuereinrichtung 100 umfasst einen Speicher 133. In diesem sind Vorlagen 401 -403 gespeichert, die jeweils eine oder mehrere Auslösebedingungen umfassen. Eine Auslösebedingung enthält die Vorgaben, die die erfassten Eingabeparameter erfüllen müssen, damit eine haptische Rückkopplung ausgelöst wird, d.h. ein Aktoraktivierungssignal 106 und gegebenenfalls zusätzlich ein Klang-Aktivierungssignal 108 erzeugt werden. Beispielsweise umfasst eine Auslösebedingung eine Gebietsdefinition für einen Auslösebereich auf der Berührfläche, in dem eine berührende Betätigung stattfinden muss, damit eine haptische Rückkopplung ausgelöst wird. Zusätzlich ist gegebenenfalls ein Kraftschwelle angeben, die durch die Andruckkraft beim berührenden Betätigen in dem Auslösebereich zu überwinden ist, um die haptische Rückkopplung auszulösen. Ferner sind der Auslösebedingung Angaben zugeordnet die die haptische Rückkopplung definieren, beispielsweise als kurzen Puls mit einer vorgegebenen Länge und Intensität oder Auslenkungsamplitude, sowie gegebenenfalls Angaben über ein zeitgleich oder angemessen verzögert auszugebendes Klangsignal. Schematisch sind in den Vorlagen nur die Auslösebereiche 410 zur Symbolisierung der Auslösebedingungen angedeutet. Es wird darauf hingewiesen, dass ein Auslöseberiech Bestandteil verschiedener Auslösebedingungen einer Vorlage sein kann.

Die erfassten Eingabeparameter, die als Signale, zum Beispiel als ein Positionssignal 36 und als ein Druckkraftsignal 46, bereitgestellt werden, werden in einer Vergleichereinrichtung 140 darauf hin ausgewertet, ob diese bewirken, dass eine der Auslösebedingungen einer aktuellen Vorlage 420 erfüllt ist. Die Vergleichereinrichtung 140 prüft somit, ob alle Vorgaben für die Eingabeparameter einer der Auslösebedingungen der aktuellen Vorlage 420 erfüllt sind. Ist eine der Auslösebedingungen erfüllt, werden ein Aktor-Aktivierungssignale 106 und gegebenenfalls zusätzlich entsprechend ein Klang-Aktivierungssignale 108 erzeugt, welches gegebenenfalls über eine in manchen Ausführungsformen ausgebildete Verzögerungseinrichtung 160 verzögert wird, um eine Gleichzeitigkeit der haptischen Wahrnehmung mit der akustischen Wahrnehmung bei einem Nutzer zu bewirken. Die einzelnen erfassten Eingabeparameter Signale, d. h. ein Positionssignal 36, ein Druckkraftsignal 46 sowie die Aktor-Aktivierungssignale 106 und gegebenenfalls die Klang-Aktivierungssignale 108 werden zusätzlich über eine Schnittstelle 150 ausgegeben. Die die Eingabeparameter repräsentierenden Signale können auch von den Erfassungseinrichtungen direkt an die Zentralsteuereinrichtung bzw. dessen Zentralrechner übermittelt werden.

Über die Schnittstelle 150 empfängt die Haptiksteuereinrichtung 100 auch das Vorlagesignal 430, welches die Auswahl der aktuellen Vorlage 420 bewirkt. Das Vorlagesignal 430 umfasst in der einfachsten Form lediglich eine Kennung die eine der gespeicherten Vorlagen identifiziert. Ebenso ist es möglich das einzelne Vorlagen parametrierbar sind. Dann enthält das Vorlagesignal 430 auch die notwendigen Parameter zum Parametrieren. Diese Parameter können ohne Anspruch auf Vollständigkeit eine Angabe über eine Anzahl von Auslösebereichen, deren Positionen, Ausdehnungen, hiermit verknüpfte Kraftschwellen, Kraftschwellenabhängigkeiten für Verlaufsvorgaben, Haptikparameter, wie eine Pulsform der Auslenkung, eine maximale Amplitude, eine Pulsdauer etc., Klanginformationen, wie eine Klangsampleauswahlangabe, eine Lautstärke, ein Verzögerungszeitangabe gegenüber Haptikauslösung, etc. umfassen. Schließlich ist es auch möglich neue Vorlagen zu erstellen und die dafür notwendigen Informationen über die Auslösebereiche etc. mit dem Vorlagesignal zu übermitteln, und die Vorlage dann in dem Speicher 133 abzulegen.

In Fig. 3 ist schematisch eine Rückansicht mehrerer Komponenten einer Bedieneinrichtung 2 dargestellt. Zu erkennen ist ein Touchscreen 10, dessen Anzeige- und Berührfläche von dem Betrachter abgewandt sind. Die Betätigungs- und Auslenkungsrichtung für die drückende Betätigung ist über einen Pfeil 501 angedeutet. Der Touchscreen 10 ist auf einer Halterplatte 510 angeordnet, welche zur Stabilisierung ein Wabenmuster aufweist. Diese Halterplatte 510 ist möglichst steif ausgebildet. Die Halterplatte 510 ist nur teilweise dargestellt. Zwischen der Halterplatte 510 und dem Touchscreen 10 ist ein Touchscreenträger 520 angeordnet, der an vier Ecken Halterungselemente 530 aufweist. Die Halterungselemente 530 und/oder der Touchscreenträger 520 sind so ausgebildet, dass der Touchscreen in Betätigungsrichtung elastisch ausgelenkt werden kann. Ferner sind an den Halterungselementen 530 Blattfedern 550 angebracht, welche eine bewegliche Lagerung an einem nicht dargestellten Gehäuse ermöglichen, so dass über einen Aktor 51 eine Auslenkung in der Ebene des Touchscreens 10 möglich ist, wie über einen Aktorik-Auslenkungspfeil 502 angedeutet ist. In Fig. 3 sind ferner Leiterplatinen 560, 570 schematisch dargestellt, in denen die verschiedenen lokalen Steuereinrichtungen wie beispielsweise die Anzeigesteuereinrichtung, die Druckmesssteuereinrichtung, die Haptik-Steuereinrichtung, die Aktor-Steuereinrichtung und ein Klanggenerator ausgebildet sind. Ferner sind ein Lautsprecher 70 sowie ein Aktor 51 zu erkennen, der einerseits am nicht dargestellten Gehäuse und andererseits an einem L-Profil 540 des Touchscreenträgers 520 befestigt ist.

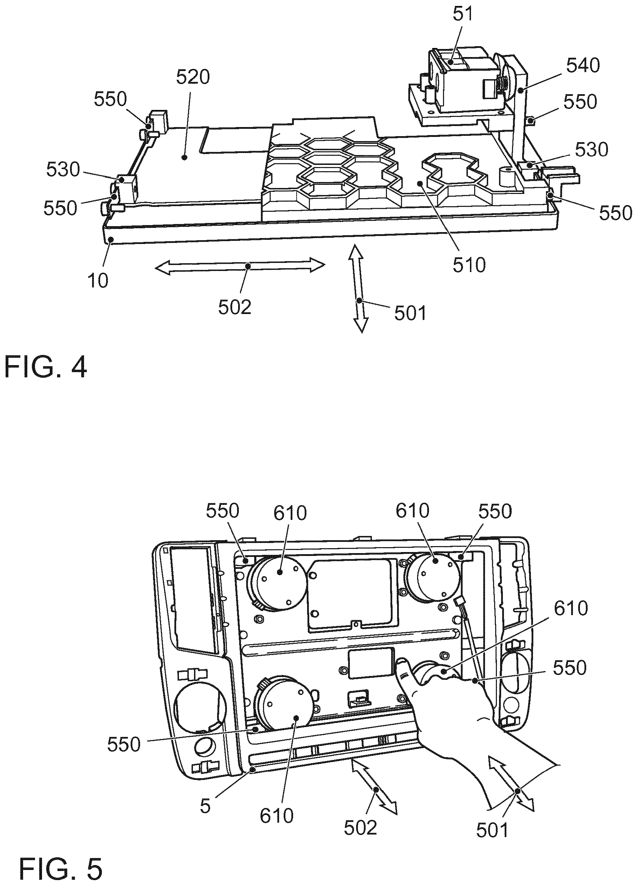

In Fig. 4 ist eine weitere schematische Ansicht ähnlich zu der der Fig. 3 gezeigt, bei der die Leiterplatten 560 und 570 fehlen. Gut zu erkennen ist das L-Profil 540.

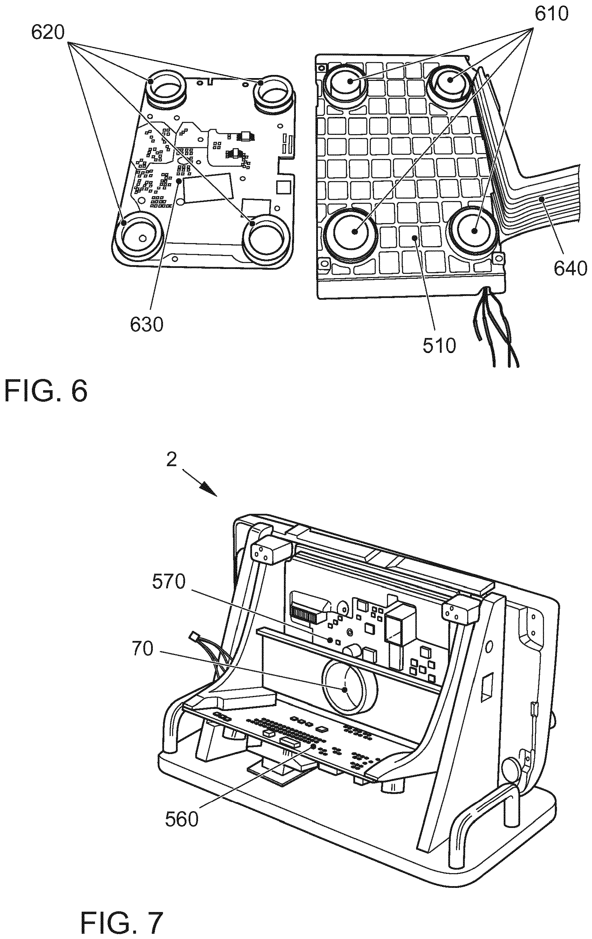

In den Fig. 5 und 6 ist eine alternative Ausgestaltung einer Bedieneinrichtung gezeigt. In Fig. 5 ist eine Vorderansicht des Gehäuses 5 zu erkennen, in welchem der Touchscreen, die lokalen Steuereinrichtungen sowie Aktoren angeordnet sind. In Fig. 5 sind aus Gründen der Veranschaulichung der Touchscreen sowie die Halteplatte und ein Touchscreenträger nicht dargestellt und fehlen. Ferner ist ein Abdeckrahmen des Gehäuses 5, welcher in der Regel einen Rand des Touchscreens überdeckt, um ein Eindringen von Staub und anderen Schmutzbestandteilen zu verhindern nicht gezeigt. Zu erkennen sind die Blattfedern 550, an welchen die Halterplatte des Touchscreens befestigt wird. Diese ist ferner mit Topfmagneten 610 verbunden, die an einer Unterseite der Halteplatte angeordnet sind (vgl. Fig.6). Diese greifen in Spulen 620 ein, die auf einer Elektronikplatine 630 angeordnet sind. Über eine Bestromung der Spulen können die Topfmagnete in Richtung einer Spulenachse 621, d. h. senkrecht zur Elektronikplatine bzw. der Halterplatte 510 ausgelenkt werden um ein haptisches Feedback an dem auf der nicht dargestellten Seite der Halteplatte 510 angeordneten Touchscreens, dessen Anschlüsse 640 in Fig. 6 zu erkennen sind, zu bewirken. Die Topfmagnete 610 bilden gemeinsam mit den Spulen 620 Aktoren aus. Auch eine auf den Touchscreen einwirkende Betätigungskraft kann über diese Aktoren gemessen werden, die zugleich als Kraftmesssensoren dienen. Bei einer Auslenkung der Topfmagnete 610 in den Spulen 620 induzieren diese in die Spulen 620 einen Strom, welcher ausgewertet werden kann, um die Andruckkraft, welche zu einer Beschleunigung des Touchscreens und hierüber der Halterplatte und der Topfmagnet geführt hat, zu ermitteln.

In Fig. 7 ist eine Rückansicht einer zusammengebauten Bedieneinrichtung 2 gezeigt. Zu erkennen sind der Lautsprecher 70, Gehäusebestandteile 6 sowie Leiterplatten 560, 570, in denen Steuereinrichtungen, wie oben beschrieben, umgesetzt sind.

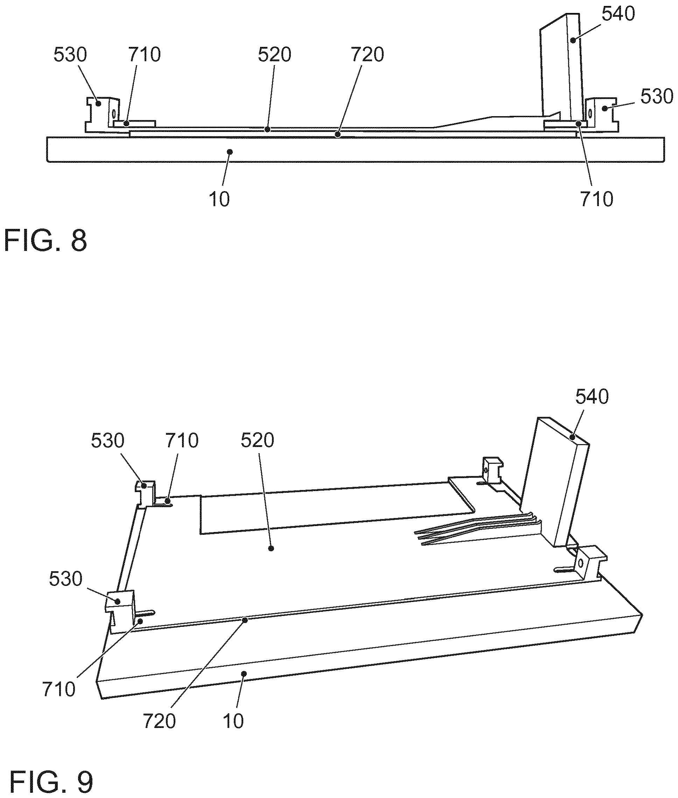

In Fig. 8 ist exemplarisch eine schematische Seitenansicht eines Touchscreens 10, der auf einem Touchscreenträger 520 mit einem L-Profil 540 angeordnet ist, gezeigt. Der Touchscreen 10 ist mit dem Touchscreenträger 520 beispielsweise über eine Klebeschicht 720 verbunden. Angrenzend an die Halterungselemente 530 sind Dehnungsmessstreifen 710 angeordnet, welche ihre Eigenschaften, insbesondere ihre elektrischen Eigenschaften bei einer Verformung des Touchscreenträgers 520 im Bereich der Halterungselemente und/oder einer Verformung der Halterungselemente 530 aufgrund einer auf dem Touchscreen wirkenden Betätigungskraft verändern.

Diese Änderung der elektronischen Eigenschaften, beispielsweise des Widerstands, wird über die Druckmesssteuereinrichtung (nicht dargestellt) in ein Druckkraftsignal gewandelt. Das Druckkraftsignal gibt die Stärke der erfassten Andruckkraft an. Die Druckmesssteuereinrichtung ist darüber hinaus in der Lage, die an den verschiedenen Dehnungsmessstreifen 710 erfassten Änderungen in das eine Druckkraftsignal zu wandeln.

In Fig. 9 ist eine perspektivische Ansicht des Touchscreens 10 gezeigt, der an dem Touchscreenträger 520 befestigt ist, beispielsweise mittels einer Klebeschicht 720.

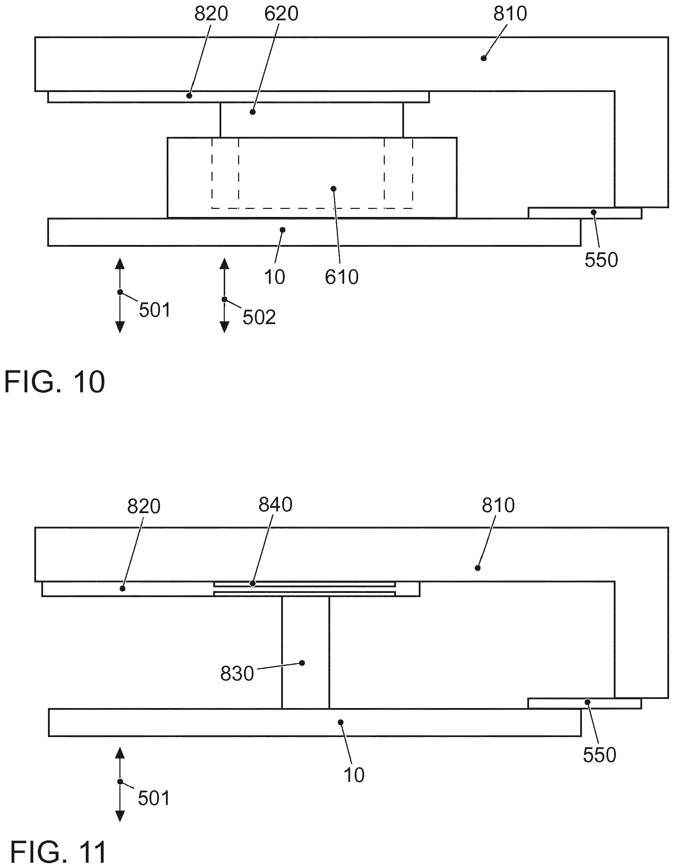

In Fig. 10 ist die Druckkrafterfassung mittels einer induktiven Aktorik noch einmal schematisch dargestellt. Zu erkennen ist der Touchscreen 10, der über Blattfedern 550 an einem Halterahmen 810 des Gehäuses 5 elastisch und beweglich gelagert ist. Mit dem Touchscreen 10 ist ein Topfmagnet 610 fest verbunden, der in eine Spule 620 eingreift, die mit einer Aktor-Steuereinrichtung auf einer Leiterplatine 820 verbunden ist, die zugleich die Druckmesssteuereinrichtung umfasst. Die Leiterplatine 820 ist fest mit dem Halterahmen 810 verbunden, so dass die Spule gegen den Halterahmen 810 und somit das Gehäuse abgestützt ist und eine Auslenkung des Touchscreens relativ zu dem Gehäuse in der Betätigungsrichtung, welche über den Betätigungsrichtungspfeil 501 angedeutet ist, bewirken kann. Die Aktorauslenkung findet parallel hierzu statt, wie der Aktor-Auslenkungspfeil 502 andeutet.

In Fig. 11 ist schematisch eine weitere Möglichkeit zum Erfassen der Betätigungskraft schematisch dargestellt. Erneut ist der Touchscreen 10 über eine Blattfeder 550 an einem Halterahmen 810 elastisch für eine Auslenkung in der Betätigungsrichtung, welche über den Betätigungsrichtungspfeil 501 angedeutet ist, gelagert. Mit dem Touchscreen 10 oder dessen Halteplatte oder Touchscreenträger (beide nicht dargestellt) ist ein Stößel 830 fest verbunden. Der mechanisch auf einen Plattenkondensator 840 mechanisch einwirkt, der in einer Leiterplatte 820, die an dem Halterahmen 810 abgestützt ist ausgebildet ist. Wird der Touchscreen 10 in das Gehäuse 5 bei einem Betätigen hineingedrückt, so drückt der Stößel auf den Plattenkondensator 840 und verändert somit einen Plattenabstand, welches wiederum eine Kapazität des Plattenkondensators 840 ändert. Aus dieser Kapazitätsänderung, die bei einem geladenen Kondensator beispielsweise mit einer Spannungsänderung zwischen den Kondensatorplatten einhergeht, kann die einwirkende Druckkraft abgeleitet werden.

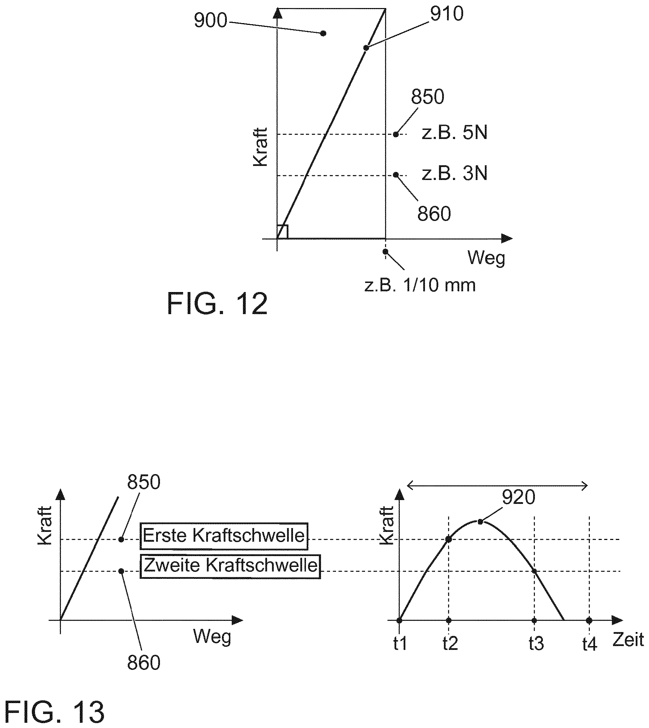

Die Berührfläche der berührungsempfindlichen Positionserfassungseinrichtung, welche vorzugsweise in einem Touchscreen integriert ist, ist in dem Gehäuse vorzugsweise so gelagert, dass eine elastische Auslenkung in Betätigungsrichtung so erfolgt, dass zwischen der Auslenkung und der hierfür benötigten Kraft ein linearer Zusammenhang besteht. Dieses ist in Figur 12 grafisch aufgetragen. Gezeigt ist der Arbeitsbereich 900 der Druckkraftmesseinrichtung. Aufgetragen ist die benötigte Kraft in Abhängigkeit von der hiermit bewirkten Auslenkung. Eine Steigung 910 gibt eine Steifigkeit der Kraftmessung an. Es werden Ausführungsformen bevorzugt, bei denen die Auslenkung möglichst minimal ist, beispielsweise weniger als ein Zehntel Millimeter beträgt. Ferner sind in Fig. 12 zwei Kraftschwellenwerte 850, 860 eingezeichnet. Ein erster Kraftschwellenwert 850, der zu einer größeren Andruck- oder Betätigungskraft zugeordnet ist, muss zunächst einmal bei einer Betätigung eines virtuellen Bedienelements erreicht oder überschritten werden, damit überhaupt eine Auslösung der mit dem virtuellen Bedienelement verknüpften Funktion erfolgen kann. Beim Erreichen oder Überschreiten der ersten Kraftschwelle bzw. des ersten Kraftschwellenwertes 850 wird ein erstes haptisches Feedback, eine erste haptische Rückkopplung, erzeugt. Ein zweites haptisches Feedback wird beim anschließenden Unterschreiten der zweiten Kraftschwelle bzw. des zweiten Kraftschwellenwertes 860, welcher einer geringeren Kraft als der erste Kraftschwellenwert 850 zugeordnet ist, ausgelöst. Das erste haptische Feedback und das zweite haptische Feedback unterscheiden sich. Vorzugsweise ist eine bewirkte maximale Auslenkung der Berührflächen der berührungsempfindlichen Positionserfassungseinrichtung bei der mit Erreichen oder Überschreiten der ersten Kraftschwelle im Zusammenhang stehenden Rückkopplung größer als die maximale Auslenkung, die mit dem Unterschreiten der zweiten Kraftschwelle im Zusammenhang steht. Dieses entspricht dem haptischen Verhalten einer physisch ausgebildeten Taste. Wichtig ist, dass beim Unterschreiten des zweiten Kraftschwellenwerts 860 eine haptische Rückkopplung nur bewirkt wird, wenn zuvor der erste Kraftschwellenwert 850 erreicht oder überschritten wird.

In Fig. 13 ist die Andruckkraft während eines Betätigungsvorgangs neben der grafischen Darstellung des Zusammenhangs zwischen Auslenkung und benötigter Andruckkraft noch einmal grafisch dargestellt. Aufgetragen ist die typische Andruckkraft gegenüber der Zeit als Andruckkraftkurve 920 bei einem Betätigungsvorgang, welcher zum Auslösen einer mit einem virtuellen Bedienelement verknüpften Funktion führt. Zum Zeitpunkt t1 legt der Nutzer sein Betätigungselement, beispielsweise seinen Finger, auf die berührungsempfindlichen Positionserfassungseinrichtung an einer Position, die im Auslösebereich des entsprechenden virtuellen Bedienelements liegt. Dieses ist vorzugsweise eine Position, die im Bereich der grafischen Darstellung des virtuellen Bedienelements liegt. Der Nutzer erhöht dann seinen Anpressdruck, bis er zum Zeitpunkt t2 mit der Betätigungskraft den ersten Kraftschwellenwert 850 überschreitet.

Zu diesem Zeitpunkt wird ein erstes Aktor-Aktivierungssignal erzeugt und hierüber mittels eines Aktors eine impulsartige Auslenkung als erste haptische Rückkopplung an der Berührfläche erzeugt. Der Nutzer registriert hierüber, dass er das virtuelle Bedienelement erfolgreich betätigt hat und verringert den Anpressdruck. Beim Unterschreiten der zweiten Kraftschwelle beziehungsweise des zweiten Kraftschwellenwerts 860 zum Zeitpunkt t3 wird ein zweites Aktor-Aktivierungssignal erzeugt und hierüber eine zweite impulsartige von der ersten impulsartigen haptischen Rückkopplung verschiedene Rückkopplung, vorzugsweise in Form einer weiteren impulsartigen Auslenkung der Berührfläche, bewirkt. Dieses vermittelt dem Benutzer ein haptisches Feedback, wie er es von einem physisch ausgebildeten Bedienelement kennt, zum Zeitpunkt t4 hebt der Nutzer den Finger von der Berührfläche erneut ab.

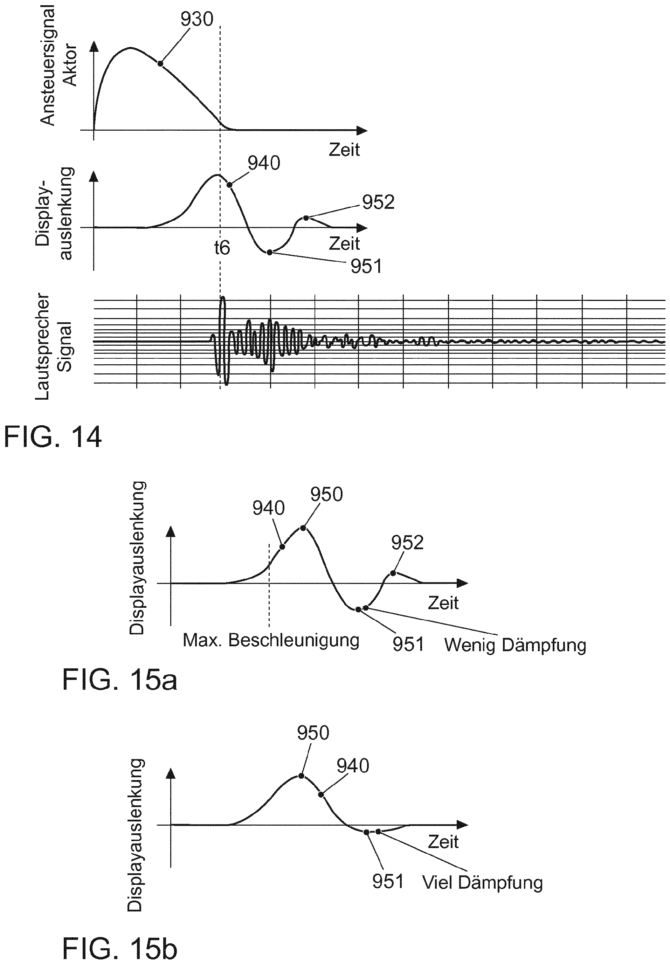

In Fig. 14 sind schematisch die Ansteuerung in Form eines Ansteuerungssignals 930 sowie daraus resultierende Auslenkung grafisch jeweils gegenüber der Zeit aufgetragen. Im oberen Graph ist das Ansteuersignal 930, wie es von der Aktor-Steuereinrichtung an den Aktor übermittelt wird, gegenüber der Zeit aufgetragen. Zu erkennen ist, dass ein kurzer Anregungspuls erzeugt wird. In dem mittleren Graphen ist die Displayauslenkung, d.h. die Auslenkung der Berührfläche, gegenüber der Zeit dargestellt. Zu erkennen ist, dass die Berührflächenauslenkung einen Maximalwert 955 einer impulsartigen Auslenkung 950 zu einem Zeitpunkt t6 erreicht, an dem das Ansteuerungssignal 930 bereits wieder nahezu den Nullwert erreicht hat. Je nach Dämpfung der Berührfläche bzw. des Touchscreens ergeben sich ein oder zwei sogenannte Nach- oder Überschwinger. In einem dritten Graph ist das ausgegebene Lautsprechersignal 960 dargestellt, welches einen kurzen Klangimpuls repräsentiert. Dieses Lautsprechersignal 960 wird zeitlich verzögert gegenüber dem Ansteuerungssignal 930 des Aktors erzeugt, so dass eine maximale Auslenkung des akustischen Signals mit der maximalen Auslenkung der Berührfläche zusammen fällt.

In Fig. 15a und 15b sind beispielhafte Auslenkungen der Berührfläche gegenüber der Zeit für dasselbe Anregungssignal, wie dies in Fig. 14 dargestellt ist, gezeigt. Während die Lagerung der Berührfläche bei der Ausführungsform, welche mit dem Graphen nach Fig. 15a korrespondiert, lediglich schwach gedämpft ist, sodass es zu den bereits oben beschriebenen Überschwingern 951,952 kommt, ist hingegen bei einer stärkeren Dämpfung (siehe Fig. 15b) neben der gewünschten impulsartigen Auslenkung 950 nur ein schwach ausgeprägter Überschwinger 951 zu beobachten. Das Auslenkungsverhalten, welches in Fig. 15b gezeigt ist, entspricht dem bevorzugten Auslenkungsverhalten.

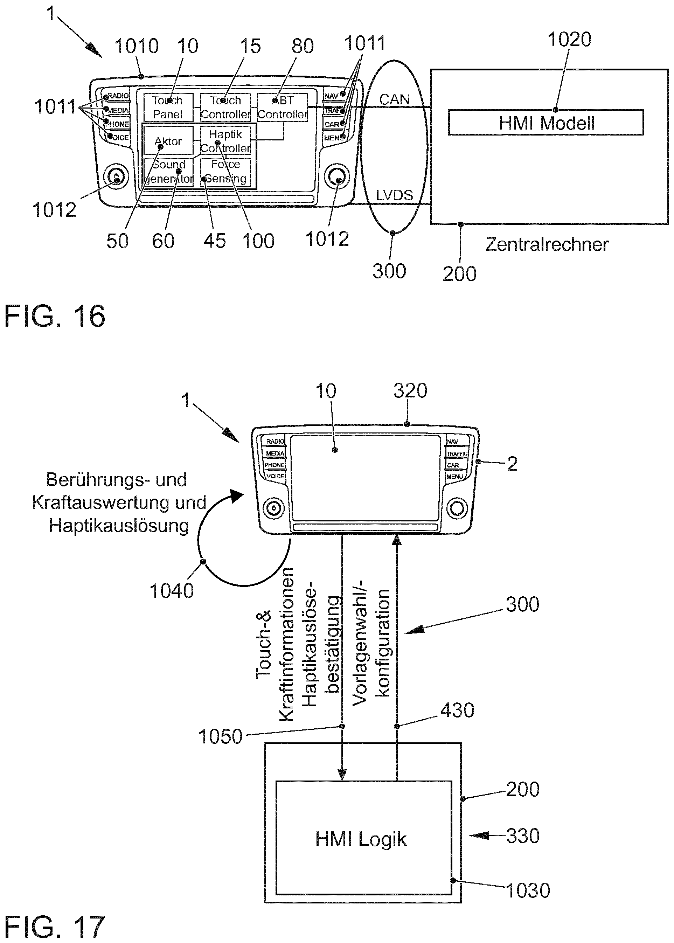

In Fig. 16 ist die Bedienvorrichtung 1 schematisch mit den verschiedenen Steuereinrichtungen gezeigt, welche eine Funktionsauslösung für virtuelle Bedienelemente mit der erfinderischen haptischen Rückkopplung ermöglichen. Die Bedienvorrichtung 1 umfasst die Bedieneinrichtung mit dem Gehäuse 5, in dem neben dem Touchscreen 10 weitere physisch ausgebildete Bedienelemente 1010 in Form von Tastern 1011 und Drehgebern 1012 ausgebildet sind. In dem Gehäuse 5 ist zum einen eine lokale Bedieneinheitssteuereinrichtung 80 integriert, welche beispielsweise eine Kommunikation mit einem Zentralrechner 200 über einen oder mehreren Busse 300 abwickelt. Beispielsweise können die Steuersignale, das heißt Aktor-Aktivierungssignale, Klang-Aktivierungssignale, Kraftschwellenauslösesignale, Kraftwerte, etc. über einen seriellen Bus, z.B. einen CAN-Bus übertragen werten. CAN steht hierbei für Controller Area Network. Grafische Informationen werden vorzugsweise über einen LVDS-Bus übertragen. LVDS steht hierbei für low voltage differential signalling. Ferner ist die Bedieneinheitssteuereinrichtung 80 für die Verarbeitung von Signalen der physisch ausgebildeten Bedienelemente 1010 verantwortlich. Zusätzlich sind an oder in dem Gehäuse 5 ein Touchscreen 10 sowie eine Touchscreensteuereinrichtung 15 vorhanden, welche die Anzeigesteuereinrichtung sowie die Positionserfassungssteuereinrichtung umfasst (vergl. Fig. 1). Zusätzlich ist eine Haptik-Steuereinrichtung 100 vorhanden, die mit der Druckmesssteuereinrichtung 45 gekoppelt ist. Ferner sind mit der Haptik-Steuereinrichtung 100 der Aktoreinrichtung 50 sowie ein Klanggenerator 60 gekoppelt, welche über die Haptik-Steuereinrichtung 100 wie oben beschrieben zum Erzeugen eines haptischen und akustischen Feedbacks entsprechend angesteuert werden. Die Haptik-Steuerung ist vollständig in den lokal in das Gehäuse integrierten Steuereinrichtungen umgesetzt sein.

In Fig. 17 ist eine beispielhafte Ausführungsform der Bedienvorrichtung 1 gezeigt. Die Bedienvorrichtung 1 umfasst eine als Anzeigebedienteil 320 ausgebildete Bedieneinrichtung 2 und eine als Zentralrechner 200 ausgebildete Zentralsteuereinrichtung 330, die über einen Bus 300, der unterschiedliche Übertragungskanäle umfassen kann, miteinander informationstechnisch verbunden sind. Die Haptiksteuereinrichtung ist in der Bedieneinrichtung 2 mit der berührungsempfindlichen Positionserfassungseinrichtung und der dahinter angeordneten Anzeigefläche der freiprogrammierbaren Anzeigeeinrichtung 20, die zusammen einen Touchscreen 10 bilden, ausgebildet. Die Bedienlogik 1030, die auch als HMI (human machine interface) Logik bezeichnet ist, ist in dem Zentralrechner 200 ausgebildet. Der Zentralrechner 200 überträgt das Vorlagesignal 430 um eine aktuelle Vorlage auszuwählen. Die erfassten Eingabeparameter werden in der Bedieneinrichtung 2 gegenüber den Auslösebedingungen der aktuell ausgewählten Vorlage ausgewertet 1040 und gegebenenfalls haptische und/oder akustische Rückkopplungen ausgelöst. Für die Auswertung der Bedienlogik, der HMI Logik, werden die erfassten Eingabeparameter und vorzugsweise ebenfalls Haptikauslöseinformationen als Statusinformationen der Bedieneinrichtung übermittelt 1050. Eine wechselseitige Kommunikation zwischen Bedieneinrichtung 2 und dem Zentralrechner 200 ist während der berührenden Betätigung nicht notwendig, um zeitnah eine haptische Rückkopplung zu veranlassen.

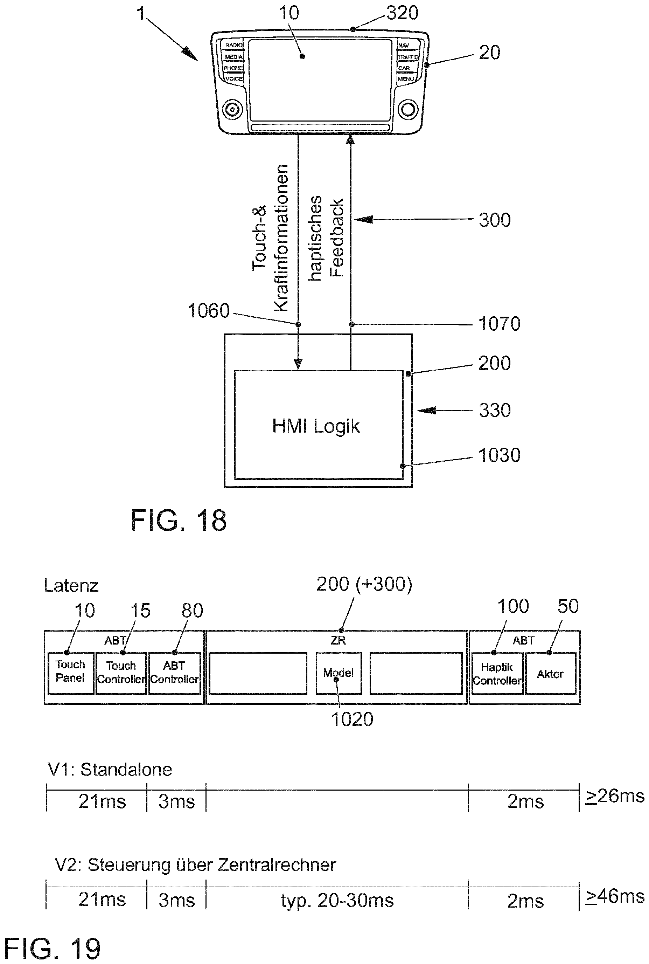

In Fig. 18 ist schematisch eine nicht erfindungsgemäße Ausführungsform dargestellt, bei der die gesamte Steuerung für die haptische Rückkopplung in dem Zentralrechner 200 ausgebildet ist. Über den Bus 300, beispielsweise ein CAN-Bus, werden Berührungs- und Kraftinformationen 1060übertragen und in der Mensch-Maschine-Schnittstellen-Logik 1030 auf dem Zentralrechner 200 ausgewertet, der Signale zum Steuern des haptischen Feedbacks an die lokalen Steuereinrichtungen in dem Gehäuse um den Touchscreen zurücküberträgt 1070. Die Übertragung von Informationen zwischen Bedieneinrichtung 2 und Zentralrechner 200 sowie die Auswertung auf dem Zentralrechner 200 gegenüber einer komplexen Bedienlogik erhöht die Latenzzeit zwischen Betätigungshandlung und haptischer Rückkopplung.

In Fig. 19 sind die Latenzzeiten unterhalb der einzelnen schematisch angedeuteten Komponenten der Bedienvorrichtung dargestellt. Bei der erfindungsgemäßen "Standalone" Variante, bei der die haptische Rückkopplung ohne den Zentralrechner realisiert ist, treten nur die Verarbeitungszeiten auf, die der Touchscreen 10 und dessen Touchscreensteuereinrichtung 15 sowie die Bedieneinheitssteuereinrichtung 80 verursachen. Zusätzlich treten die Zeiten auf, die die Haptik-Steuerung 100 und die Aktoreinrichtung 50 benötigen, um das haptische Rückkopplungssignal zu erzeugen.

Bei der alternativen nicht erfindungsgemäßen Ausgestaltung, bei der die Haptiksteuerung in dem Zentralrechner 200 umgesetzt ist, kommen weitere Latenzzeiten hinzu, die für die Bus-Übertragung sowie die Auswertung im Zentralrechner benötigt werden.

Die angegebenen Latenzzeiten für die einzelnen Komponenten entsprechen einer beispielhaften Ausführungsform. Eine akzeptable Gesamtlatenzzeit, die von einem Nutzer nicht als Zeitverzögert wahrgenommen wird, sollte 50 Millisekunden Reaktionszeit zwischen dem Ereignis der Kraftschwellenüberschreitung und dem haptischen Feedback nicht überschreiten.

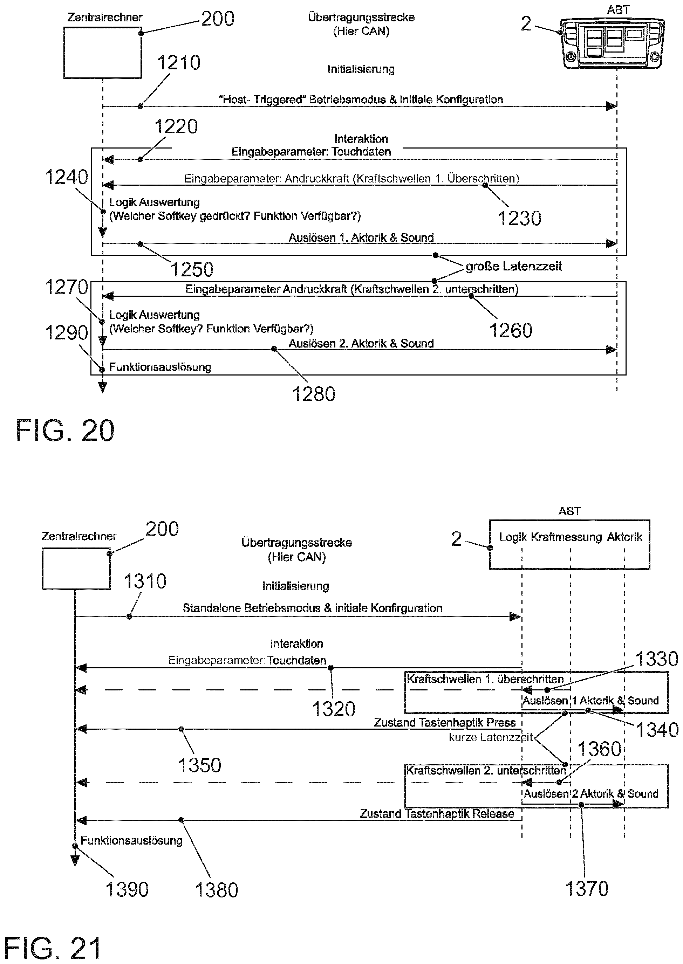

Anhand von Fig. 20 soll der Ablauf der übertragenen Nachrichten bei einem Bedienvorgang für eine nicht erfindungsgemäße Ausführungsform mit einer auf dem Zentralrechner ausgebildeten Haptiksteuerung erläutert werden. Zunächst wird ein Initialisierungsnachrichtenpaket 1210 von dem Zentralrechner zu der lokalen Bedieneinrichtung übertragen, welche die lokale Bedieneinrichtung konfiguriert. Findet eine Berührung statt, werden die Berührpositionsdaten 1220 an den Zentralrechner übermittelt. Ebenso werden die Andruckkraftwerte übermittelt. Somit auch die Kraftwerte, während ein Überschreiten oder Erreichen der ersten Kraftschwelle eintritt 1230. Der Zentralrechner 200 führt eine Logikauswertung 1240 durch und erzeugt ein Signal zum Auslösen einer ersten haptischen und akustischen Rückkopplung 1250. Wird die zweite Kraftschwelle unterschritten, so wird die Andruckkraft erneut an den Zentralrechner übermittelt 1260, der nach einer weiteren Logikauswertung 1270 Signale zum Auslösen des zweiten haptischen Effekts und des zweiten Klangsignals an eine lokale Bedieneinrichtung überträgt 1280. Ferner veranlasst der Zentralrechner die Auslösung mit dem betätigten virtuellen Bedienelement im Zusammenhang stehende Funktion 1290.

In Fig. 21 ist das Nachrichtentelegramm für eine erfindungsgemäße Ausführungsform gezeigt, bei der die Haptikauslösung lokal in der lokalen Bedieneinrichtung 2 ausgeführt wird. Über den Zentralrechner 200 findet erneut eine Initialisierung 1310 statt, mit der die lokale Bedieneinrichtung konfiguriert wird. Ermittelte Berührpositionen werden erneut bei einer erfassten Betätigung an den Zentralrechner übermittelt 1320. Wird durch die Druckkraftmessung ermittelt, dass die erste Kraftschwelle überschritten wird 1330, so wird eine erste haptische und akustische Rückmeldung von der Haptik-Steuereinrichtung in der lokalen Bedienvorrichtung ausgelöst 1340. Die Kraftdaten werden, wie gestrichelt angedeutet ist, vorzugsweise auch an den Zentralrechner 200 übermittelt. Dem Zentralrechner wird übermittelt 1350, dass das virtuelle Bedienelement vollständig niedergedrückt ist. Lässt der Nutzer das virtuelle Bedienelement wieder los, wird die zweite Kraftschwelle unterschritten. Sobald dies erkannt ist 1360, wird von der lokalen Haptik-Steuereinrichtung eine zweite haptische Rückkopplung über ein Aktor-Aktivierungssignal und ein Klang-Aktivierungssignal ausgegeben 1370. Dem Zentralrechner wird mitgeteilt 1380, dass der Benutzer die Taste wieder losgelassen hat. Der Zentralrechner veranlasst daraufhin eine Funktionsauslösung1390. Auch das Unterschreiten, der zweiten Kraftschwelle bzw. die Andruckkraft wird vorzugsweise, wie gestrichelt angedeutet, auch an den Zentralrechner 200 übermittelt.

Während bei der Ausführungsform nach Fig. 20 eine Übertragung von Daten über den in der Regel hinsichtlich der Übertragungsbandbreite begrenzten Bus notwendig ist und ferner eine Bearbeitung in dem Zentralrechner notwendig ist, der gegebenenfalls mit um die Bearbeitungszeit konkurrierenden parallelen Aufgaben beschäftigt ist, ist dieses bei der Ausführungsform nach Fig. 21 nicht notwendig

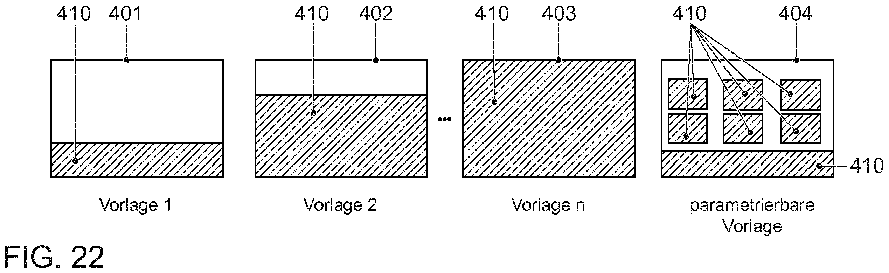

In Fig. 22 sind einige Vorlagen 401 bis 404 schematisch dargestellt, wobei jeweils über eine Schraffur die Auslöseberieche angedeutet sind. Zumindest die rechts dargestellte Vorlage 404 ist dynamisch parametrierbar.

Es ergibt sich für den Fachmann, dass unterschiedliche Ausgestaltungsmöglichkeiten der Erfindung möglich sind. Wesentlich ist, dass die Steuerung der haptische Rückkopplungen in der Bedieneinrichtung unabhängig von der Zentralsteuereinrichtung erfolgt, die die Haptiksteuerung nur indirekt über eine Vorlagenauswahl vornimmt. Die haptischen Rückkopplungen sind vorzugsweise impulsartig ausgebildet, besonders bevorzugt so, dass jeweils lediglich eine impulsartige Auslenkung aus der Ruhelage, besonders bevorzugt der Andruckkraft des Nutzers entgegenwirkend, verursacht werden. Ferner werden bevorzugt akustische Signale oder Klänge zeitlich synchronisiert, lokal benachbart zu der Berührfläche der Bedienvorrichtung ausgegeben, sodass aufgrund der räumlichen Hörwahrnehmung ein Ursprung des Klangs der Berührposition zugeordnet wird und somit das gesamte sensorische Empfinden für einen menschlichen Benutzer verbessert wird, um eine physische Taste nachzubilden.

### Bezugszeichenliste

- 1: Bedienvorrichtung
- 2: Bedieneinrichtung
- 3: Kraftfahrzeug
- 5: Gehäuse
- 6: Gehäusebestandteile
- 10: Touchscreen
- 15: Touchscreensteuereinrichtung
- 20: frei programmierbare Anzeigevorrichtung
- 21: Anzeigefläche
- 25: Anzeigesteuereinrichtung
- 30: berührungsempfindliche Positionserfassungseinrichtung
- 31: Berührfläche
- 35: Positionserfassungssteuereinrichtung
- 36: Positionssignal
- 40: Druckkraftmesseinrichtung
- 41: Sensorelement
- 45: Druckmesssteuereinrichtung
- 46: Druckkraftsignal
- 50: Aktoreinrichtung
- 51: Aktor
- 55: Aktor-Steuereinrichtung
- 60: Klanggenerator
- 70: Lautsprecher
- 80: Bedieneinheitssteuereinrichtung
- 100: Haptik-Steuereinrichtung
- 106: Aktor-Aktivierungssignal
- 108: Klang-Aktivierungssignal
- 133: Speicher
- 136: Vergleichsergebnissignal (Auslösebereichsposition)
- 140: Vergleichereinrichtung
- 150: Schnittstelle
- 160: Verzögerungseinrichtung
- 200: Zentralrechner
- 210: Zentralrechnerschnittstelle
- 300: BUS
- 320: Anzeigebedienteil
- 330: Zentralsteuereinrichtung
- 401-404: Vorlagen
- 410: Auslösebereich
- 420: aktuelle Vorlage
- 430: Vorlagesignal
- 501: Betätigungsrichtungspfeil
- 502: Aktorauslenkungsrichtungspfeil
- 510: Halterplatte
- 520: Touchscreenträger
- 530: Halterungselement
- 540: L-Profil
- 550: Blattfeder
- 560: Leiterplatte
- 570: Leiterplatte
- 610: Topmagnet
- 620: Spule
- 621: Spulenachse
- 630: Elektronikplatine
- 640: Anschlüsse
- 710: Dehnungsmessstreifen
- 720: Klebeschicht
- 810: Halterahmen
- 820: Leiterplatte
- 830: Stößel
- 840: Plattenkondensator
- 850: erster Kraftschwellenwert
- 860: zweiter Kraftschwellenwert
- 900: Arbeitsbereich
- 910: Steigung
- 920: Andruckkraftkurve
- 930: Ansteuerungssignal
- 940: Auslenkung
- 950: impulsartige Auslenkung
- 951: Überschwinger
- 952: Überschwinger
- 960: Lautsprechersignal
- t1-t5: Zeitpunkte
- 1010: physische Bedienelemente
- 1011: Taster
- 1012: Drehgeber
- 1020: Mensch-Maschine-Modell
- 1030: Mensch-Maschine-Schnittstellen-Logik
- 1040: Auswerten Eingabeparameter und Haptikauslösung
- 1050: Übermittlung Eingabeparameter und Haptikauslöseinformation
- 1060: Übertragen Eingabeparameter (Kraft- und Berührinformationen)
- 1070: Übertragen Haptiksteuersignale
- 1210: Initialisierung
- 1220: Übermitteln Berührpositionsdaten
- 1230: Übermitteln Überschreitung der ersten Kraftschwelle
- 1240: Logikauswertung
- 1250: Auslösen erster Rückkopplung
- 1260: Übermitteln Unterschreitung der zweiten Kraftschwelle
- 1270: weitere Logikauswertung
- 1280: Auslösen zweiter Rückkopplung
- 1290: Funktionsauslösung
- 1310: Initialisierung
- 1320: Übermitteln Berührpositionsdaten
- 1330: Überschreiten der ersten Kraftschwelle detektiert
- 1340: Auslösen erster Rückkopplung
- 1350: Übermitteln Überschreitung der ersten Kraftschwelle (virtuelles Bedienelement vollständig gedrückt)
- 1360: Erkennen der Unterschreiten der zweiten Kraftschwelle
- 1370: Auslösen zweiter Rückkopplung
- 1380: Übermitteln Unterschreitung der zweiten Kraftschwelle
- 1390: Funktionsauslösung

## Patentansprüche

1. Bedienvorrichtung (1) für ein Fahrzeug mit haptischer Rückkopplung umfassend eine berührungsempfindliche Positionserfassungseinrichtung (30) zum Ermitteln von Berührpositionen als Eingabeparameter auf einer Berührfläche (31) der berührungsempfindlichen Positionserfassungseinrichtung (30) ;
eine mit der berührungsempfindlichen Positionserfassungseinrichtung (30) gekoppelte Aktoreinrichtung (50) zum Erzeugen der haptisch erfassbaren Rückkopplung an der Berührfläche (31); sowie
eine Bedienlogik (1030), die ausgebildet ist, ein Auslösen von Funktionen und/oder Fahrzeugsystemen abhängig von erfassten Eingabeparametern auszuführen,
**dadurch gekennzeichnet, dass**
die berührungsempfindliche Positionserfassungseinrichtung (30) und die Aktoreinrichtung (50) mit einer Haptiksteuereinrichtung (100) in einer Bedieneinrichtung (2) ausgebildet sind, und die Bedienlogik (1030) in einer von der Bedieneinrichtung (2) getrennt ausgebildeten Zentralsteuereinrichtung (330) ausgebildet ist, welche informationstechnisch mit der Bedieneinrichtung (2) gekoppelt ist, und erfasste Eingabeparameter an die Haptiksteuereinrichtung (100) übermittelt werden, wobei die Haptiksteuereinrichtung (100) eine Speichereinrichtung (133) umfasst, in der mehrere unterschiedliche Vorlagen (401-404) gespeichert sind, wobei die mehreren Vorlagen (401-404) jeweils mindestens eine Auslösebedingungen für eine haptische Rückkopplung umfassen, und
die Bedienlogik (1030) ausgebildet ist, ein Vorlagesignal zum Auswählen oder Erzeugen einer aktuellen Vorlage (420) an die Haptiksteuereinrichtung (100) zu übertragen und wobei die Haptiksteuereinrichtung (100) eine Vergleichereinrichtung (140) aufweist, die die bei einer Nutzereingabe über die Bedieneinrichtung (2) in der Bedieneinrichtung (2) berührenden erfassten Eingabeparameter mit der mindestens einen Auslösebedingung der aktuellen Vorlage (420) vergleicht, um zu ermitteln, ob die erfassten Eingabeparameter die mindestens eine Auslösebedingung erfüllen, und die Haptiksteuereinrichtung (100) ausgebildet ist, die Aktoreinrichtung (50) zum Erzeugen der haptischen Rückkopplung ansteuern, wenn die Vergleichereinrichtung (140) die Erfüllung der mindestens einen Auslösebedingung festgestellt hat.

2. Bedienvorrichtung (1) nach Anspruch 1, **dadurch gekennzeichnet, dass** die mindestens eine Auslösebedingung mindestens eine Gebietsdefinition für einen Auslösebereich (410) umfasst und die Vergleichereinrichtung (140) ausgebildet ist, die Erfüllung der mindestens einen Auslösebedingung nur festzustellen, wenn beim Vergleichen der erfassten Eingabeparameter mit der mindestens einen Auslösebedingung ermittelt wird, dass die als Eingabeparameter erfasste Berührposition in dem Auslösebereich (410) der Auslösebedingung liegt.

3. Bedienvorrichtung (1) nach Anspruch 1 oder 2, **dadurch gekennzeichnet, dass** mit der Berührfläche (31) in der Bedieneinrichtung (2) eine Druckkraftmesseinrichtung (40) gekoppelt ist, welche als einen der Eingabeparameter eine bei der berührenden Betätigung der Berührfläche (31) ausgeübte Andruckkraft erfasst, und die mindestens eine Auslösebedingung mindestens eine Andruckkraftvorgabe umfasst, und die Vergleichereinrichtung (140) ausgebildet ist, die Erfüllung der mindestens einen Auslösebedingung nur festzustellen, wenn beim Vergleichen der erfassten Eingabeparameter mit einer der Auslösebedingung ermittelt wird, dass die als Eingabeparameter erfasste Andruckkraft die Andruckkraftvorgabe erfüllt.

4. Bedienvorrichtung (1) nach einem der Ansprüche 1 bis 3, **dadurch gekennzeichnet, dass** mindestens eine der mehreren Vorlagen (401-404) neben der mindestens einen Auslösebedingung mindestens eine weitere von der mindestens einen Auslösebedingung verschieden Auslösebedingung umfasst, wobei die verschiedenen Auslösebedingungen mit unterschiedlichen haptischen Rückkopplungen verknüpft sind, wobei die unterschiedlichen haptischen Rückkopplungen unterschiedliche haptische Eindrücke bei einem Nutzer an der Berührfläche (31) hervorrufen.

5. Bedienvorrichtung (1) nach einem der Ansprüche 3 oder 4, **dadurch gekennzeichnet, dass** die mindestens eine Auslösebedingung und/oder die mindestens eine weitere Auslösebedingung eine Verlaufsvorgabe umfassen, die Vorgaben für die zu unterschiedlichen Zeitpunkten erfassten Eingabeparameter umfasst, und die Vergleichseinrichtung ausgebildet ist, zeitlich zu unterschiedlichen Zeitpunkten erfasste Eingabeparameter mit den Vorgaben der Verlaufsvorgabe zu vergleichen und die Erfüllung der mindestens einen Auslösebedingung und oder der mindestens einen weiteren Auslösebedingung nur festzustellen, wenn beim Vergleichen der erfassten Eingabeparameter mit einer der Auslösebedingung ermittelt wird, dass die zu unterschiedlichen Zeitpunkten erfassten Eingabeparameter die Vorgaben der Verlaufsvorgabe zu den unterschiedlichen Zeitpunkten erfüllen.

6. Bedienvorrichtung (1) nach einem der Ansprüche 1 bis 5, **dadurch gekennzeichnet, dass** die Bedieneinrichtung (2) und die Zentralsteuereinrichtung (330) über einen seriellen Datenbus zum Übermitteln der erfassten Eingabeparameter und Übertragen des Vorlagensignals informationstechnisch verbunden sind.

7. Verfahren zum Erfassen von Nutzereingaben für eine Steuerung und/oder ein Auslösen von Funktionen und/oder Fahrzeugsystemen mittels berührender Betätigung einer Berührfläche (31) einer berührungsempfindlichen Positionserfassungseinrichtung (30), umfassend die Schritte:
Erfassen von Eingabeparametern bei der berührenden Betätigung der Berührfläche (31) einer berührungsempfindlichen Positionserfassungseinrichtung (30),
Auswerten der erfassten Eingabeparametern gegenüber einer Bedienlogik (1030), die abhängig von erfassten Eingabeparametern ein Auslösen von den Funktionen und/oder den Fahrzeugsystemen bewirkt, und
Erzeugen einer haptischen Rückkopplung an der Berührfläche (31), wenn eine Nutzereingabe erfasst ist,
**dadurch gekennzeichnet, dass**
das Erfassen der Eingabeparameter an einer Bedieneinrichtung (2) erfolgt, die getrennt von einer Zentralsteuereinrichtung (330) ausgebildet ist, die informationstechnisch mit der Bedieneinrichtung (2) gekoppelt ist, und das Auswerten gegenüber der Bedienlogik (1030) in der Zentralsteuereinrichtung (330) ausgeführt wird, wobei von der Zentralsteuereinrichtung (330) zu der Haptiksteuereinrichtung (100) der Bedieneinrichtung (2) ein Vorlagesignal übertragen wird, anhand dessen eine von mehreren Vorlagen (401-404) der Haptiksteuereinrichtung (100) als aktuelle Vorlage (420) ausgewählt wird oder die aktuelle Vorlage (420) erzeugt wird, wobei eine Vorlage (401-404) jeweils mindestens eine Auslösebedingungen für eine haptische Rückkopplung umfasset, und die an oder in der Bedieneinrichtung (2) erfassten Eingabeparameter an eine Haptiksteuereinrichtung (100) in der Bedieneinrichtung (2) übermittelt werden und in der Haptiksteuereinrichtung (100) die erfassten Eingabeparameter mit der mindestens einen Auslösebedingung vergleichen werden, um zu ermitteln, ob die erfassten Eingabeparameter die mindestens eine Auslösebedingung erfüllen, und die Haptiksteuereinrichtung (100) die Aktoreinrichtung (50) zum Erzeugen der haptischen Rückkopplung ansteuert, wenn das Vergleichen der Eingabeparameter mit der mindestens einen Auslösebedingung ergibt, dass die mindestens einen Auslösebedingung erfüllt ist.

8. Verfahren nach Anspruch 7, **dadurch gekennzeichnet, dass** eine Berührposition als Eingabeparameter erfasst wird, und die mindestens eine Auslösebedingung mindestens eine Gebietsdefinition für einen Auslösebereich (410) umfasst und die Erfüllung der mindestens einen Auslösebedingung nur festgestellt wird, wenn beim Vergleichen der erfassten Eingabeparameter mit der mindestens einen Auslösebedingung ermittelt wird, dass die als Eingabeparameter erfasste Berührposition in dem Auslösebereich (410) der Auslösebedingung liegt.

9. Verfahren nach Anspruch 7 oder 8, **dadurch gekennzeichnet, dass** mittels einer mit der Berührfläche (31) in der Bedieneinrichtung (2) gekoppelten Druckkraftmesseinrichtung (40) als einer der Eingabeparameter eine bei der berührenden Betätigung der Berührfläche (31) ausgeübte Andruckkraft erfasst wird, und die mindestens eine Auslösebedingung mindestens eine Andruckkraftvorgabe umfasst und die Erfüllung der mindestens einen Auslösebedingung nur festgestellt wird, dass die als Eingabeparameter erfasste Andruckkraft die Andruckkraftvorgabe erfüllt.

10. Verfahren nach einem der Ansprüche 7 bis 9, **dadurch gekennzeichnet, dass** eine der mehreren Vorlagen (401-404) neben der mindestens einen Auslösebedingung mindestens eine weitere von der mindestens einen Auslösebedingung verschieden Auslösebedingung umfasst, wobei die verschiedenen Auslösebedingungen mit unterschiedlichen haptischen Rückkopplungen verknüpft sind und die unterschiedlichen haptischen Rückkopplungen unterschiedliche haptische Eindrücke bei einem Nutzer an der Berührfläche (31) hervorrufen, und die erfassten Eingabeparameter mit den verschiedenen Auslösebedingungen vergleichen werden, und somit abhängig davon, welche der Auslösebedingungen erfüllt ist, unterschiedliche haptische Rückkopplungen erzeugt werden.

11. Verfahren nach einem der Ansprüche 9 oder 10, **dadurch gekennzeichnet, dass** die mindestens eine Auslösebedingung und/oder die mindestens eine weitere Auslösebedingung eine Verlaufsvorgabe umfassen, die Vorgaben für die zu unterschiedlichen Zeitpunkten erfassten Eingabeparameter umfasst, und die zeitlich zu unterschiedlichen Zeitpunkten erfassten Eingabeparameter mit den Vorgaben der Verlaufsvorgabe verglichen werden und die Erfüllung der mindestens einen Auslösebedingung und oder der mindestens einen weiteren Auslösebedingung nur festgestellt wird, wenn beim Vergleichen der erfassten Eingabeparameter mit einer der Auslösebedingung ermittelt wird, dass die zu unterschiedlichen Zeitpunkten erfassten Eingabeparameter die Vorgaben der Verlaufsvorgabe zu den unterschiedlichen Zeitpunkten erfüllen.

12. Verfahren nach einem der Ansprüche 7 bis 11, **dadurch gekennzeichnet, dass** das Vorlagesignal so erzeugt wird, dass in der Haptiksteuereinrichtung (100) mindestens eine Auslösebedingung für die aktuelle Vorgabe anhand von übermittelten Bedingungsparametern modifiziert oder erzeugt wird, so dass die mindestens eine Auslösebedingung an den aktuellen Bedienkontext angepasst ist.

13. Verfahren nach einem der Ansprüche 7 bis 12, **dadurch gekennzeichnet, dass** in einer Speichereinrichtung (133) der Haptiksteuereinrichtung (100) die mehreren Vorlagen (401-404) gespeichert sind und eine Auswahl der aktuellen Vorlage (420) durch eine Übermittlung einer Kennung an die Bedieneinrichtung (2) erfolgt, die eine der Vorlagen (401-404) identifiziert.

14. Verfahren nach einem der Ansprüche 7 bis 13, **dadurch gekennzeichnet, dass** mindestens eine Vorlage (401-404) parametrisiert ist, und neben der die aktuelle Vorlage (420) identifizierenden Kennung noch Bedingungsparameter übertragen werden.

15. Verfahren nach einem der Ansprüche 7 bis 14, **dadurch gekennzeichnet, dass** mit der haptischen Rückkopplung an der Bedieneinrichtung (2) ein akustisches Signals ausgegeben wird.

## Claims

1. Operating apparatus (1) for a vehicle with haptic feedback, comprising
a touch-sensitive position capture device (30) for determining touch positions as input parameters on a touch surface (31) of the touch-sensitive position capture device (30);
an actuator device (50) which is coupled to the touch-sensitive position capture device (30) and is intended to produce the haptically capturable feedback on the touch surface (31); and
an operating logic unit (1030) which is designed to initiate functions and/or vehicle systems on the basis of captured input parameters,
**characterized in that**
the touch-sensitive position capture device (30) and the actuator device (50) are formed with a haptic control device (100) in an operating device (2), and the operating logic unit (1030) is formed in a central control device (330) which is separate from the operating device (2) and is coupled to the operating device (2) using information technology, and captured input parameters are transmitted to the haptic control device (100), wherein the haptic control device (100) comprises a storage device (133) in which a plurality of different templates (401-404) are stored, wherein the plurality of templates (401-404) each comprise at least one initiation condition for haptic feedback, and
the operating logic unit (1030) is designed to transmit a template signal for selecting or producing a current template (420) to the haptic control device (100), and wherein the haptic control device (100) has a comparator device (140) which compares the touching input parameters captured in the operating device (2) during a user input via the operating device (2) with the at least one initiation condition of the current template (420) in order to determine whether the captured input parameters satisfy the at least one initiation condition, and the haptic control device (100) is designed to control the actuator device (50) to produce the haptic feedback if the comparator device (140) has determined that the at least one initiation condition has been satisfied.

2. Operating apparatus (1) according to Claim 1, **characterized in that** the at least one initiation condition comprises at least one area definition for an initiation region (410), and the comparator device (140) is designed to determine that the at least one initiation condition has been satisfied only when it is determined, when comparing the captured input parameters with the at least one initiation condition, that the touch position captured as an input parameter is in the initiation region (410) of the initiation condition.

3. Operating apparatus (1) according to Claim 1 or 2, **characterized in that** a compressive force measurement device (40) is coupled to the touch surface (31) in the operating device (2) and, as one of the input parameters, captures a press-on force exerted during the touching actuation of the touch surface (31), and the at least one initiation condition comprises at least one press-on force specification, and the comparator device (140) is designed to determine that the at least one initiation condition has been satisfied only when it is determined, when comparing the captured input parameters with one of the initiation conditions, that the press-on force captured as an input parameter complies with the press-on force specification.

4. Operating apparatus (1) according to one of Claims 1 to 3, **characterized in that**, in addition to the at least one initiation condition, at least one of the plurality of templates (401-404) comprises at least one further initiation condition which differs from the at least one initiation condition, wherein the different initiation conditions are linked to different haptic feedback, wherein the different haptic feedback causes different haptic impressions in a user on the touch surface (31).

5. Operating apparatus (1) according to either of Claims 3 and 4, **characterized in that** the at least one initiation condition and/or the at least one further initiation condition comprise(s) a progression specification which comprises specifications for the input parameters captured at different times, and the comparison device is designed to compare input parameters captured at different times with the specifications of the progression specification and to determine that the at least one initiation condition or the at least one further initiation condition has been satisfied only when it is determined, when comparing the captured input parameters with one of the initiation conditions, that the input parameters captured at different times comply with the specifications of the progression specification at the different times.

6. Operating apparatus (1) according to one of Claims 1 to 5, **characterized in that** the operating device (2) and the central control device (330) are connected using information technology via a serial data bus for transmitting the captured input parameters and transmitting the template signal.

7. Method for capturing user inputs for controlling and/or initiating functions and/or vehicle systems by means of touching actuation of a touch surface (31) of a touch-sensitive position capture device (30), comprising the steps of:
capturing input parameters during the touching actuation of the touch surface (31) of a touch-sensitive position capture device (30),
evaluating the captured input parameters with respect to an operating logic unit (1030) which initiates the functions and/or the vehicle systems on the basis of captured input parameters, and
producing haptic feedback on the touch surface (31) if a user input is captured,
**characterized in that**
the input parameters are captured at an operating device (2) which is separate from a central control device (330) which is coupled to the operating device (2) using information technology, and the evaluation with respect to the operating logic unit (1030) is carried out in the central control device (330), wherein the central control device (330) transmits a template signal to the haptic control device (100) of the operating device (2), on the basis of which template signal one of a plurality of templates (401-404) of the haptic control device (100) is selected as the current template (420) or the current template (420) is produced, wherein a template (401-404) respectively comprises at least one initiation condition for haptic feedback, and
the input parameters captured at or in the operating device (2) are transmitted to a haptic control device (100) in the operating device (2) and the captured input parameters are compared with the at least one initiation condition in the haptic control device (100) in order to determine whether the captured input parameters satisfy the at least one initiation condition, and the haptic control device (100) controls the actuator device (50) to produce the haptic feedback if the comparison of the input parameters with the at least one initiation condition reveals that the at least one initiation condition has been satisfied.

8. Method according to Claim 7, **characterized in that** a touch position is captured as an input parameter, and the at least one initiation condition comprises at least one area definition for an initiation region (410), and it is determined that the at least one initiation condition has been satisfied only when it is determined, when comparing the captured input parameters with the at least one initiation condition, that the touch position captured as an input parameter is in the initiation region (410) of the initiation condition.

9. Method according to Claim 7 or 8, **characterized in that** a press-on force exerted during the touching actuation of the touch surface (31) is captured as one of the input parameters by means of a compressive force measurement device (40) coupled to the touch surface (31) in the operating device (2), and the at least one initiation condition comprises at least one press-on force specification and it is determined that the at least one initiation condition has been satisfied only when the press-on force captured as an input parameter complies with the press-on force specification.

10. Method according to one of Claims 7 to 9, **characterized in that**, in addition to the at least one initiation condition, one of the plurality of templates (401-404) comprises at least one further initiation condition which differs from the at least one initiation condition, wherein the different initiation conditions are linked to different haptic feedback and the different haptic feedback causes different haptic impressions in a user on the touch surface (31), and the captured input parameters are compared with the different initiation conditions, and different haptic feedback is therefore produced depending on which of the initiation conditions has been satisfied.

11. Method according to either of Claims 9 and 10, **characterized in that** the at least one initiation condition and/or the at least one further initiation condition comprise(s) a progression specification which comprises specifications for the input parameters captured at different times, and the input parameters captured at different times are compared with the specifications of the progression specification and it is determined that the at least one initiation condition and/or the at least one further initiation condition has/have been satisfied only when it is determined, when comparing the captured input parameters with one of the initiation conditions, that the input parameters captured at different times comply with the specifications of the progression specification at the different times.

12. Method according to one of Claims 7 to 11, **characterized in that** the template signal is produced in such a manner that at least one initiation condition for the current template is modified or produced on the basis of transmitted condition parameters in the haptic control device (100), with the result that the at least one initiation condition is adapted to the current operating context.

13. Method according to one of Claims 7 to 12, **characterized in that** the plurality of templates (401-404) are stored in a storage device (133) of the haptic control device (100) and the current template (420) is selected by transmitting an identifier, which identifies one of the templates (401-404), to the operating device (2).

14. Method according to one of Claims 7 to 13, **characterized in that** at least one template (401-404) is parameterized and, in addition to the identifier identifying the current template (420), condition parameters are also transmitted.

15. Method according to one of Claims 7 to 14, **characterized in that** an acoustic signal is output with the haptic feedback on the operating device (2) .

## Revendications

1. Dispositif de conduite (1) destiné à un véhicule à retour haptique, ledit dispositif comprenant
un moyen de détection de position sensible au contact (30) destiné à déterminer des positions de contact comme paramètres d'entrée sur une surface de contact (31) du moyen de saisie de position sensible au contact (30) ;
un moyen d'actionnement (50) couplé au moyen de saisie de position sensible au contact (30) et destiné à générer le retour détectable de manière haptique sur la surface de contact (31) ; et
une logique de conduite (1030) destinée à déclencher des fonctions et/ou des systèmes du véhicule en fonction de paramètres d'entrée saisis,
**caractérisé en ce que**
le moyen de saisie de position sensible au contact (30) et le moyen d'actionnement (50) sont conçus avec un moyen de commande haptique (100) dans un moyen de conduite (2), et la logique de conduite (1030) est conçue dans un moyen de commande central (330) qui est distinct du moyen de conduite (2) et qui est couplé informatiquement au moyen de conduite (2) et les paramètres d'entrée saisis sont transmis au moyen de commande haptique (100), le moyen de commande haptique (100) comprenant un moyen de mémorisation (133) dans lequel une pluralité de spécifications différentes (401 à 404) sont mémorisées, la pluralité de spécifications (401 à 404) comprenant chacune au moins une condition de déclenchement d'un retour haptique, et
la logique de fonctionnement (1030) est conçue pour transmettre un signal de spécification destiné à sélectionner ou générer une spécification actuelle (420) au moyen de commande haptique (100) et le moyen de commande haptique (100) comportant un moyen de comparaison (140) qui compare les paramètres d'entrée saisis par contact dans le dispositif de conduite (2) en cas d'entrée utilisateur par le biais du moyen de conduite (2) à l'au moins une condition de déclenchement de la spécifications actuelle (420) afin de déterminer si les paramètres d'entrée saisis satisfont à l'au moins une condition de déclenchement et le moyen de commande haptique (100) étant conçu pour commander le moyen d'actionnement (50) destiné à générer le retour haptique lorsque le moyen de comparaison (140) a déterminé que l'au moins une condition de déclenchement a été satisfaite.

2. Dispositif de conduite (1) selon la revendication 1, **caractérisé en ce que** l'au moins une condition de déclenchement comprend au moins une définition de domaine pour une zone de déclenchement (410) et le moyen de comparaison (140) est conçu pour déterminer que l'au moins une condition de déclenchement est satisfaite uniquement si, lors de la comparaison du paramètre d'entrée saisi à l'au moins une condition de déclenchement, il est déterminé que la position de contact saisie comme paramètre d'entrée se trouve dans la zone de déclenchement (410) de la condition de déclenchement.

3. Dispositif de conduite (1) selon la revendication 1 ou 2, **caractérisé en ce qu'**un moyen de mesure de force de pression (40), qui saisit une force de pression exercée lors de l'actionnement par contact de la surface de contact (31) comme l'un des paramètres d'entrée, est couplé à la surface de contact (31) dans le moyen de conduite (2) et l'au moins une condition de déclenchement comprend au moins une spécification de force de pression, et le moyen de comparaison (140) est conçu pour déterminer que l'au moins une condition de déclenchement est satisfaite uniquement si, lors de la comparaison des paramètres d'entrée saisis à l'une des conditions de déclenchement, il est déterminé que la force de pression saisie comme paramètre d'entrée satisfait à la spécification de force de pression.

4. Dispositif de conduite (1) selon l'une des revendications 1 à 3, **caractérisé en ce que** l'une au moins de la pluralité de spécifications (401 à 404) comprend au moins une autre condition de déclenchement, différente de l'au moins une condition de déclenchement, en plus de l'au moins une condition de déclenchement, les différentes conditions de déclenchement étant combinées à différents retours haptiques, les différents retours haptiques provoquant sur la surface de contact (31) différentes impressions haptiques chez un utilisateur.

5. Dispositif de conduite (1) selon l'une des revendications 3 et 4, **caractérisé en ce que** l'au moins une condition de déclenchement et/ou l'au moins une autre condition de déclenchement comportent une spécification de profil qui comprend des spécifications pour les paramètres d'entrée saisis temporellement à des instants différents, et le moyen de comparaison est conçu pour comparer des paramètres d'entrée, saisis à différents instants, aux spécifications de la spécification de profil et pour déterminer que l'au moins une condition de déclenchement et/ou l'au moins une autre condition de déclenchement est satisfaite uniquement si, lors de la comparaison des paramètres d'entrée saisis à l'une des conditions de déclenchement, il est déterminé que les paramètres d'entrée saisis à différents instants satisfont aux spécifications de la spécification de profil à différents instants.

6. Dispositif de conduite (1) selon l'une des revendications 1 à 5, **caractérisé en ce que** le moyen de conduite (2) et le moyen de commande central (330) sont reliés informatiquement par le biais d'un bus de données série destiné à transférer les paramètres d'entrée saisis et transmettre le signal de spécification.

7. Procédé de saisie d'entrées utilisateur destinées à commander et/ou déclencher des fonctions et/ou des systèmes du véhicule par actionnement par contact d'une surface de contact (31) d'un moyen de saisie de position sensible au contact (30), ledit procédé comprenant les étapes suivantes :
saisir des paramètres d'entrée lors de l'actionnement par contact de la surface de contact (31) d'un moyen de saisie de position sensible au contact (30),
évaluer les paramètres d'entrée saisis par rapport à une logique de conduite (1030) qui déclenche les fonctions et/ou les systèmes du véhicule en fonction des paramètres d'entrée saisis, et
générer un retour haptique sur la surface de contact (31) lorsqu'une entrée utilisateur est saisie, **caractérisé en ce que**
la saisie des paramètres d'entrée est effectuée sur un moyen de conduite (2) qui est conçu séparément d'un moyen de commande central (330) qui est couplé informatiquement au moyen de conduite (2), et l'évaluation est effectuée par rapport à la logique de conduite (1030) dans le moyen de commande central (330), un signal de spécification étant transmis du moyen de commande central (330) au moyen de commande haptique (100) du moyen de conduite (2), signal sur la base duquel l'une de la pluralité de spécifications (401 à 404) du moyen de commande haptique (100) est sélectionnée comme spécification actuelle (420) ou la spécification actuelle (420) est générée, une spécification (401 à 404) comprenant à chaque fois au moins une condition de déclenchement d'un retour haptique, et les paramètres d'entrée saisis sur ou dans le moyen de conduite (2) étant transmis à un moyen de commande haptique (100) dans le moyen de conduite (2) et, dans le moyen de commande haptique (100), les paramètres d'entrée saisis étant comparés à l'au moins une condition de déclenchement afin de déterminer si les paramètres d'entrée saisis satisfont à l'au moins une condition de déclenchement, et le moyen de commande haptique (100) commandant le moyen d'actionnement (50) pour générer le retour haptique lorsque la comparaison des paramètres d'entrée à l'au moins une condition de déclenchement montre que l'au moins une condition de déclenchement est satisfaite.

8. Procédé selon la revendication 7, **caractérisé en ce qu'**une position de contact est saisie comme paramètre d'entrée, et l'au moins une condition de déclenchement comprend au moins une définition de domaine pour une zone de déclenchement (410) et la satisfaction à l'au moins une condition de déclenchement est déterminée uniquement si, lors de la comparaison des paramètres d'entrée saisis à l'au moins une condition de déclenchement, il est déterminé que la position de contact saisie comme paramètre d'entrée se trouve dans la zone de déclenchement (410) de la condition de déclenchement.

9. Procédé selon la revendication 7 ou 8, **caractérisé en ce qu'**une force de pression, exercée lors de l'actionnement par contact de la surface de contact (31), est saisie comme l'un des paramètres d'entrée à l'aide d'un moyen de mesure de force de pression (40) couplé à la surface de contact (31) dans le dispositif d'actionnement (2), et l'au moins une condition de déclenchement comprend au moins une spécification de force de pression et la satisfaction à l'au moins une condition de déclenchement est déterminée uniquement si la force de pression saisie comme paramètre d'entrée satisfait à la spécification de force de pression.

10. Procédé selon l'une des revendications 7 à 9, **caractérisé en ce que** l'une de la pluralité de spécifications (401 à 404) comprend en plus de l'au moins une condition de déclenchement au moins une autre condition de déclenchement différente de l'au moins une condition de déclenchement, les différentes conditions de déclenchement étant combinées à différents retours haptiques et les différents retours haptiques provoquant sur la surface de contact (31) différentes impressions haptiques chez un utilisateur, et les paramètres d'entrée saisis étant comparés aux différentes conditions de déclenchement, et différents retours haptiques pouvant ainsi être générés en fonction de celle des conditions de déclenchement qui est satisfaite.

11. Procédé selon l'une des revendications 9 ou 10, **caractérisé en ce que** l'au moins une condition de déclenchement et/ou l'au moins une autre condition de déclenchement comprennent une spécification de profil qui comprend des spécifications pour les paramètres d'entrée saisis à différents instants, et les paramètres d'entrée, saisis temporellement à différents instants, sont comparés aux spécifications de la spécification de profil et la satisfaction à l'au moins une condition de déclenchement et/ou à l'au moins une autre condition de déclenchement n'est déterminée que si, lors de la comparaison des paramètres d'entrée saisis à l'une des conditions de déclenchement, il est déterminé que les paramètres d'entrée saisis à différents instants satisfont aux spécifications de la spécification de profil à différents instants.

12. Procédé selon l'une des revendications 7 à 11, **caractérisé en ce que** le signal de spécification est généré de telle sorte qu'au moins une condition de déclenchement pour la spécification actuelle soit modifiée ou générée dans le moyen de commande haptique (100) sur la base des paramètres de condition transmis de sorte que l'au moins une condition de déclenchement soit adaptée au contexte de conduite actuel.

13. Procédé selon l'une des revendications 7 à 12, **caractérisé en ce que** la pluralité de spécifications (401 à 404) sont mémorisées dans un moyen de mémorisation (133) du moyen de commande haptique (100) et une sélection de la spécification actuelle (420) est effectuée par transmission d'une caractéristique au moyen de conduite (2) qui identifie l'une des spécifications (401 à 404).

14. Procédé selon l'une des revendications 7 à 13, **caractérisé en ce qu'**au moins une spécification (401 à 404) est paramétrée, et des paramètres de condition sont également transmis en plus de la caractéristique identifiant la spécification actuelle (420).

15. Procédé selon l'une des revendications 7 à 14, **caractérisé en ce qu'**un signal acoustique est délivré avec le retour haptique sur le moyen de conduite (2).
